# EUROPEAN PATENT APPLICATION

(11) **EP 4 818 396 A1**
(43) Date of publication of application: **07.10.2026**
(21) Application number: 24897664.9
(22) Date of filing: 28.11.2024
(51) Int. Cl.: D06M 15/333, C04B 16/06, C04B 20/00

(54) **CONVERGENCE YARN, METHOD FOR PRODUCING CONVERGENCE YARN, AQUEOUS SIZING COMPOSITION, HYDRAULIC COMPOSITION, AND MOLDED BODY**

(30) Priority: 30.11.2023 JP 2023202829; 14.06.2024 JP 2024096863
(71) Applicant: Kuraray Co., Ltd., Kurashiki-shi, Okayama 710-0801 (JP)
(72) Inventor: YOSHIDA, Tomoka, Okayama-shi, Okayama 702-8601 (JP); HINAMOTO, Kimiko, Okayama-shi, Okayama 702-8601 (JP); IMAGAWA, Akira, Okayama-shi, Okayama 702-8601 (JP); HORIKOSHI, Takafumi, Okayama-shi, Okayama 702-8601 (JP); TAKENOIRI, Masatoshi, Okayama-shi, Okayama 702-8601 (JP); HINAMOTO, Yusuke, Okayama-shi, Okayama 702-8601 (JP); KATSUYA, Satoshi, Okayama-shi, Okayama 702-8601 (JP)
(74) Representative: Müller-Boré & Partner Patentanwälte PartG mbB
(86) International application number: PCT/JP2024/042223
(87) International publication number: WO 2025/115980

(57) **Abstract**

An object of the present invention is to provide a bundled yarn and a hydraulic composition, which provide a molded body having a high toughness and a small variation in toughness.

The present invention relates to a bundled yarn containing plural fibers integrated by a sizing agent, wherein the sizing agent is a water-soluble resin, and the bundled yarn further contains an oil agent at a content of 5 mg/m² or more per unit surface area of the fibers.

## Description

### TECHNICAL FIELD

The present invention relates to a bundled yarn, a method of producing a bundled yarn, an aqueous sizing composition, a hydraulic composition, and a molded body.

### BACKGROUND ART

Conventionally, in a molded body that is a cured product of a hydraulic material typified by concrete and cement mortar, it is known to incorporate reinforcing fibers into a matrix containing the hydraulic material for the purposes of, for example, improving the mechanical strength, such as flexural strength and toughness, and inhibiting cracking. However, it is extremely difficult to uniformly disperse such fibers in the matrix, and there are cases where the fibers are entangled to form agglomerates (fiber balls) during kneading of the fibers with the hydraulic material. When such agglomerates are formed, a reinforcing effect attributed to the fibers is unlikely to be exerted.

As a means for solving the above-described problem, for example, Patent Document 1 discloses a bundled yarn hardened with a water-soluble sizing agent, which bundled yarn has a separation degree of fibers of 20% or higher in a concrete molded article. Further, Patent Document 2 discloses a bundled yarn which is bundled with a water-soluble polymeric resin and has a separation degree of fibers of 50% or higher at pH 12.

### PRIOR ART DOCUMENTS

### PATENT DOCUMENTS

Patent Document 1: JP-B-S64-001424
Patent Document 2: JP-A-H10-183473

### SUMMARY OF THE INVENTION

### PROBLEMS TO BE SOLVED BY THE INVENTION

In Patent Document 1, a water-soluble polymer that is soluble in water and has a film-forming capability is used as the water-soluble sizing agent. However, when fibers are bundled using a water-soluble polymer having high film-forming capability, it is difficult to increase the separation degree of the fibers, and the strength of a molded body cannot be sufficiently improved. In Patent Document 2, fibers are bundled using only a water-soluble resin; therefore, the kneading time needs to be extended, and this causes buckling of the fibers, as a result of which separated fibers are likely to form fiber balls, and the strength of a molded body thus cannot be sufficiently improved. Particularly, conventional bundled yarns are not capable of sufficiently increasing the toughness of a molded body, and there is a variation in their performance, leaving room for improvement.

In view of the above, an object of the present invention is to provide a bundled yarn and a hydraulic composition, which provide a molded body having a high toughness and a small variation in toughness.

### SOLUTIONS TO THE PROBLEMS

The present inventors conducted detailed studies to solve the above-described problems, thereby completing the present invention. That is, the present invention encompasses the following preferred aspects.
[1] A bundled yarn, comprising plural fibers integrated by a sizing agent, wherein
   the sizing agent is a water-soluble resin, and
   the bundled yarn further comprises an oil agent at a content of 5 mg/m² or more per unit surface area of the fibers.
[2] The bundled yarn according to [1], comprising the oil agent at a content of 30 mg/m² or more per unit surface area of the fibers.
[3] The bundled yarn according to [1] or [2], comprising the oil agent at a content of 500 mg/m² or less per unit surface area of the fibers.
[4] The bundled yarn according to any one of [1] to [3], wherein the sizing agent and the oil agent are in a mixed state.
[5] The bundled yarn according to any one of [1] to [4], wherein the fibers have an average fiber diameter of 3 to 900 µm.
[6] The bundled yarn according to any one of [1] to [5], wherein the oil agent comprises an oil and/or a surfactant.
[7] The bundled yarn according to any one of [1] to [6], wherein, when 2 parts by mass of the water-soluble resin is added to 100 parts by mass of an alkaline water of pH 12 and the resultant is stirred at 20°C for 5 minutes, 60% by mass or more of the water-soluble resin is dissolved.
[8] The bundled yarn according to any one of [1] to [7], wherein the water-soluble resin comprises a structural unit derived from a vinyl alcohol.
[9] The bundled yarn according to any one of [1] to [8], comprising the water-soluble resin at a content of 4 mg/m² or more per unit surface area of the fibers.
[10] The bundled yarn according to any one of [1] to [9], comprising the water-soluble resin at a content of 200 mg/m² or less per unit surface area of the fibers.
[11] The bundled yarn according to any one of [1] to [10], wherein a ratio (Y/X) of the content (Y% by mass) of the oil agent based on a total amount of the bundled yarn with respect to the content (X% by mass) of the water-soluble resin based on a total amount of the bundled yarn is 1 to 15.
[12] The bundled yarn according to any one of [1] to [11], wherein the fibers have an aspect ratio of 30 to 2,500.
[13] A method of producing a bundled yarn comprising plural fibers, the method comprising the following step 1:
   (Step 1) the step of adhering an oil-in-water dispersion, which comprises a sizing agent that is a water-soluble resin, an oil agent, and water, to the surfaces of the fibers.
[14] The method according to [13], wherein dispersed particles comprised in the oil-in-water dispersion have an average particle size of 1 to 500 nm.
[15] A bundled yarn, produced by the method according to [13] or [14].
[16] An aqueous sizing composition, comprising:
   a sizing agent that is a water-soluble resin;
   an oil agent; and
   water,
   wherein
   the content of water is 80% by mass or more with respect to a total amount of the aqueous sizing composition, and
   the aqueous sizing composition is an oil-in-water dispersion in which dispersed particles have an average particle size of 1 to 500 nm.
[17] A hydraulic composition, comprising, at least:
   the bundled yarn according to any one of [1] to [12];
   a cement component;
   an aggregate; and
   water.
[18] The hydraulic composition according to [17], wherein the aggregate does not comprise a coarse aggregate.
[19] The hydraulic composition according to [17] or [18], wherein a ratio (water/cement component) of the mass content of water with respect to the mass content of the cement component is 20 to 75% by mass.
[20] A molded body, obtained by curing the hydraulic composition according to any one of [17] to [19].
[21] The bundled yarn according to any one of [1] to [12], produced using an oil agent that has an average particle size of 0.1 to 800 nm in an oil-in-water dispersion adjusted to a solid concentration of 25 mg/L.

### EFFECTS OF THE INVENTION

According to the present invention, a bundled yarn and a hydraulic composition, which provide a molded body having a high toughness and a small variation in toughness, can be provided.

### DETAILED DESCRIPTION

Embodiments of the present invention will now be described in detail. It is noted here, however, that the present invention is not limited to the below-described embodiments.

The bundled yarn of the present invention is a bundled yarn containing plural fibers integrated by a sizing agent. The sizing agent is a water-soluble resin, and the bundled yarn further contains an oil agent at a content of 5 mg/m² or more per unit surface area of the fibers. The bundled yarn is usually used by being dispersed in a hydraulic composition that contains at least a hydraulic material and water, and a molded body can be obtained by curing this hydraulic composition. The hydraulic composition is produced by, for example, mixing the bundled yarn and the hydraulic material in a dry state in advance, and slowly adding water to the resulting mixture with stirring. The sizing agent is dissolved by the addition of water, and a shear force is generated by the stirring, whereby the bundled fibers are disentangled and separated. It is considered that, by dispersing the fibers contained in the bundled yarn as uniformly as possible in the matrix of the hydraulic composition in a single-fiber state without damaging the fibers, the effect of reinforcing the hydraulic material by the fibers can be improved. It is considered that the inclusion of an appropriate amount of the oil agent in the bundled yarn allows the water-soluble resin to be dispersed more uniformly as small domains on the surfaces of the fibers, as a result of which the fiber separation of the bundled yarn by an addition of water occurs more quickly and uniformly. In addition, in a molded body obtained by curing the hydraulic composition, it is believed that the adhesion between the fibers and a cement matrix is adjusted to be in an appropriate range by the presence of the oil agent on the surfaces of separated fibers, and the fibers maintain a certain level of adhesion state while sliding in the event of cracking or the like of the molded body, whereby the toughness of the molded body is improved. Particularly, since the bundled yarn of the present invention contains a specific amount or more of the oil agent, it is considerd that particles formed by the oil agent allow the water-soluble resin to be dispersed more uniformly as small domains on the surfaces of the fibers.

### (Oil Agent)

The bundled yarn of the present invention contains at least one oil agent at a content of 5 mg/m² or more per unit surface area of the fibers. The oil agent is an organic component containing at least an oil and/or a surfactant, and may contain a single kind of oil and/or surfactant, or may be a mixture containing two or more kinds of oils and/or surfactants. Examples of the oil agent include: oils such as low-polarity oils and high-polarity oils; and surfactants. The oil agent may contain at least one surfactant.

The oil agent used in the present invention preferably contains a surfactant, and more preferably contains a surfactant and a low-polarity oil.

The oil agent used in the present invention is an organic component containing at least an oil and/or a surfactant, and the oil is a component classified as a low-polarity oil or a high-polarity oil. The oil agent may contain a surfactant. A total amount of the oil and/or the surfactant in the oil agent is preferably 90% by mass or more, more preferably 95% by mass or more, still more preferably 98% by mass or more, based on a total amount of the oil agent. The oil agent used in the present invention preferably contains an oil or a surfactant, more preferably contains a surfactant, still more preferably contains an oil and a surfactant, and yet still more preferably contains a low-polarity oil and a surfactant. The amount of the oil contained in the oil agent is not particularly limited; however, from the standpoint of the stability of the oil agent in the production process, the desired bundled state of the fibers, and the adhesion state of the fibers in a composite material, the amount of the oil contained in the oil agent is preferably 50 to 100% by mass, more preferably 60 to 100% by mass, still more preferably 70 to 98% by mass, yet still more preferably 75 to 95% by mass, particularly preferably 80 to 95% by mass, based on a total amount of the oil agent.

The low-polarity oil is an oil that does not have any of an anionic group, a cationic group, a polyoxyalkylene group, and a fatty acid ester group. Examples of the low-polarity oil include: hydrocarbon oils, such as paraffinic oils, naphthenic oils, and polybutene; and oxidized polyolefins. The low-polarity oil does not act as a surfactant. From the standpoint of the stability of the oil agent in the production process, the desired bundled state of the fibers, and the adhesion state of the fibers in a composite material, the amount of the low-polarity oil in the oil agent is preferably 60 to 98% by mass, more preferably 70 to 97% by mass, still more preferably 80 to 95% by mass, based on a total amount of the oil agent. In one preferred embodiment, the oil agent contains at least one kind of a low-polarity oil. In this embodiment, the oil agent may contain a single kind of a low-polarity oil, or may contain two or more kinds of low-polarity oils.

The high-polarity oil is an oil that has a polar group but is not a surfactant. The high-polarity oil is, for example, an oil that has at least one polar group selected from the group consisting of an anionic group, a cationic group, a polyoxyalkylene group, and a fatty acid ester group, but does not exhibit a surfactant action. From the standpoint of improving the toughness of a molded body obtained using the bundled yarn and inhibiting a variation in the toughness, the amount of the high-polarity oil in the oil agent is preferably 0 to 60% by mass, more preferably 0 to 50% by mass, still more preferably 0 to 40% by mass, based on a total amount of the oil agent.

### (Surfactant)

The surfactant has a surface activity, and may be, for example, an anionic surfactant, a cationic surfactant, an amphoteric surfactant, or a nonionic surfactant. In one preferred embodiment, the oil agent contains at least one surfactant. In this embodiment, the oil agent may contain one or more kinds of surfactants and, for example, the oil agent may further contain one kind of surfactant, or two or more kinds of surfactants, in addition to at least one kind of oil. The surfactant is preferably at least one selected from the group consisting of anionic surfactants, cationic surfactants, amphoteric surfactants, and/or nonionic surfactants, more preferably a nonionic surfactant. From the standpoint of the stability of the oil agent, the amount of the surfactant in the oil agent is preferably 2 to 30% by mass, more preferably 5 to 25% by mass, still more preferably 5 to 20% by mass, based on a total amount of the oil agent.

In one embodiment of the present invention, the oil agent preferably contains one or more kinds of surfactants. The oil agent may further contain one kind of oil, or two or more kinds of oils, in addition to at least one kind of surfactant. The amount of the surfactant(s) in the oil may be 2 to 50% by mass, 2 to 70% by mass, or 2 to 80% by mass; however, from the standpoint of the stability of the oil agent, it is preferably 2 to 100% by mass, more preferably 3 to 95% by mass, still more preferably 5 to 90% by mass, based on a total amount of the oil agent.

In an embodiment in which the oil agent contains a surfactant and an oil (preferably a low-polarity oil), a total amount of the surfactant and the oil in the oil agent is preferably 60% by mass or more, more preferably 80% by mass or more, yet still more preferably 90% by mass or more, further preferably 95% by mass or more, particularly preferably 98% by mass or more, based on a total amount of the oil agent. An upper limit of the total amount of the surfactant and the oil may be 100% by mass or less.

The amount of the oil in the oil agent is not particularly limited; however, in one aspect of the present invention, from the standpoint of the stability of the oil agent in the production process, the desired bundled state of the fibers, and the adhesion state of the fibers in a composite material, the amount of the oil in the oil agent may be preferably 10 to 98% by mass, more preferably 5 to 97% by mass, still more preferably 0 to 95% by mass, based on a total amount of the oil agent.

The anionic surfactant is a surfactant having at least one anionic group. Examples of the anionic group include a carboxylic acid group, a sulfonic acid group, a sulfate group, and salts thereof.

Examples of the anionic surfactant include: fatty acids (salts), such as oleic acid, palmitic acid, sodium oleate, potassium palmitate, and triethanolamine oleate; hydroxyl group-containing carboxylic acids (salts), such as hydroxyacetic acid, potassium hydroxyacetate, lactic acid, and potassium lactate; polyoxyalkylene alkyl ether acetic acids (salts), such as polyoxyethylene tridecyl ether acetic acid (sodium salt); salts of carboxyl group-polysubstituted aromatic compounds, such as potassium trimellitate and potassium pyromellitate; alkylbenzene sulfonic acids (salts), such as dodecylbenzene sulfonic acid (sodium salt); polyoxyalkylene alkyl ether sulfonic acids (salts), such as polyoxyethylene 2-ethylhexyl ether sulfonic acid (potassium salt); higher fatty acid amide sulfonic acids (salts), such as (sodium) stearoyl methyltaurine, (sodium) lauroyl methyltaurine, (sodium) myristoyl methyltaurine, and (sodium) palmitoyl methyltaurine; N-acyl sarcosinic acids (salts), such as lauroyl sarcosine acid (sodium salt); alkyl sulfuric acid esters (salts), such as 2-ethylhexyl sulfate (sodium salt); polyoxyalkylene sulfuric acid esters (salts), such as polyoxyethylene 2-ethylhexyl ether sulfate (sodium salt); long-chain sulfosuccinates, such as sodium di-2-ethylhexyl sulfosuccinate and sodium dioctyl sulfosuccinate; and long-chain N-acyl glutamates, such as sodium N-lauroyl glutamate and disodium N-stearoyl-L-glutamate.

The cationic surfactant is a surfactant having at least one cationic group. Examples of the cationic group include amino ether groups, quaternary ammonium groups, primary amine groups, secondary amine groups, tertiary amine groups, an imidazolium base, and a pyridinium base.

Examples of the cationic surfactant include:
alkyl quaternary ammonium salts, such as lauryl trimethyl ammonium chloride, myristyl trimethyl ammonium chloride, palmityl trimethyl ammonium chloride, stearyl trimethyl ammonium chloride, oleyl trimethyl ammonium chloride, cetyl trimethyl ammonium chloride, behenyl trimethyl ammonium chloride, coconut oil alkyl trimethyl ammonium chloride, beef tallow alkyl trimethyl ammonium chloride, stearyl trimethyl ammonium bromide, coconut oil alkyl trimethyl ammonium bromide, cetyl trimethyl ammonium methosulfate, oleyl dimethylethyl ammonium ethosulfate, dioctyl dimethyl ammonium chloride, dilauryl dimethyl ammonium chloride, distearyl dimethyl ammonium chloride, and octadecyl diethylmethyl ammonium sulfate;
(polyoxyalkylene) alkylamino ether salts, such as (polyoxyethylene) laurylamino ether lactate, stearylamino ether lactate, di(polyoxyethylene) laurylmethylamino ether dimethyl phosphate, di(polyoxyethylene) laurylethyl ammonium ethosulfate, di(polyoxyethylene) hardened beef tallow alkyl ethyl amine ethosulfate, di(polyoxyethylene) laurylmethyl ammonium dimethyl phosphate, and di(polyoxyethylene) stearylamine lactate;
acylamidoalkyl quaternary ammonium salts, such as *N*-(2-hydroxyethyl)-*N,N*-dimethyl-*N*-stearoylamidopropyl ammonium nitrate, lanolin fatty acid amidopropylethyl dimethylammonium ethosulfate, and lauroylamidoethyl methyldiethyl ammonium methosulfate;
alkylethenoxy quaternary ammonium salts, such as dipalmityl polyethenoxyethyl ammonium chloride and distearyl polyethenoxymethyl ammonium chloride;
alkyl isoquinolinium salts, such as lauryl isoquinolinium chloride;
benzalkonium salts, such as lauryl dimethyl benzyl ammonium chloride and stearyl dimethyl benzyl ammonium chloride;
benzethonium salts, such as benzyldimethyl{2-[2-(p-1,1,3,3-tetramethylbutylphenoxy)ethoxy]ethyl}ammonium chloride;
pyridinium salts, such as cetylpyridinium chloride;
imidazolinium salts, such as oleyl hydroxyethyl imidazolinium ethosulfate and lauryl hydroxyethyl imidazolinium ethosulfate;
acyl basic amino acid alkyl ester salts, such as N-cocoyl arginine ethyl ester pyrrolidone carboxylate and N-lauroyl lysine ethyl ester chloride;
primary amine salts, such as laurylamine chloride, stearylamine bromide, hardened beef tallow alkylamine chloride, and rosin amine acetate;
secondary amine salts, such as cetyl methylamine sulfate, lauryl methylamine chloride, dilaurylamine acetate, stearyl ethylamine bromide, lauryl propylamine acetate, dioctylamine chloride, and octadecyl ethylamine hydroxide;
tertiary amine salts, such as dilauryl methylamine sulfate, lauryl diethylamine chloride, laurylethyl methylamine bromide, diethanol stearylamidoethylamine trihydroxyethyl phosphate, and stearylamidoethyl ethanolamine urea polycondensate acetate;
fatty acid amide guanidinium salts; and
alkyl trialkylene glycol ammonium salts, such as lauryl triethylene glycol ammonium hydroxide.

The amphoteric surfactant is a surfactant having at least one anionic group and at least one cationic group.

Examples of the amphoteric surfactant include: alkyl phosphonic acids (salts), such as octyl phosphonate (potassium salt); aromatic phosphonic acids (salts), such as phenyl phosphonate (potassium salt); alkyl phosphonate alkyl phosphoric acid esters (salts), such as 2-ethylhexyl phosphonate mono-2-ethylhexyl ester (potassium salt); and nitrogen-containing alkyl phosphonic acids (salts), such as aminoethyl phosphonic acid (diethanolamine salt).

The nonionic surfactant is a surfactant having at least one polyoxyalkylene group, fatty acid ester group, or the like.

Examples of the nonionic surfactant include:
polyoxyalkylene linear alkyl ethers, such as polyoxyethylene hexyl ether, polyoxyethylene octyl ether, polyoxyethylene decyl ether, polyoxyethylene lauryl ether, and polyoxyethylene cetyl ether;
polyoxyalkylene branched primary alkyl ethers, such as polyoxyethylene 2-ethylhexyl ether, polyoxyethylene isocetyl ether, and polyoxyethylene isostearyl ether;
polyoxyalkylene branched secondary alkyl ethers, such as polyoxyethylene 1-hexylhexyl ether, polyoxyethylene 1-octylhexyl ether, polyoxyethylene 1-hexyloctyl ether, polyoxyethylene 1-pentylheptyl ether, and polyoxyethylene 1-heptylpentyl ether;
polyoxyalkylene alkenyl ethers, such as polyoxyethylene oleyl ether;
polyoxyalkylene alkyl phenyl ethers such as polyoxyethylene octyl phenyl ether, polyoxyethylene nonyl phenyl ether, and polyoxyethylene dodecyl phenyl ether;
polyoxyalkylene alkylaryl phenyl ethers, such as polyoxyethylene tristyryl phenyl ether, polyoxyethylene distyryl phenyl ether, polyoxyethylene styryl phenyl ether, polyoxyethylene tribenzyl phenyl ether, polyoxyethylene dibenzyl phenyl ether, and polyoxyethylene benzyl phenyl ether;
polyoxyalkylene fatty acid esters, such as polyoxyethylene monolaurate, polyoxyethylene monooleate, polyoxyethylene monostearate, polyoxyethylene monomyristylate, polyoxyethylene dilaurate, polyoxyethylene diolate, polyoxyethylene dimyristylate, and polyoxyethylene distearate;
sorbitan esters, such as sorbitan monopalmitate and sorbitan monooleate;
polyoxyalkylene sorbitan fatty acid esters, such as polyoxyethylene sorbitan monostearate and polyoxyethylene sorbitan monooleate;
glycerin fatty acid esters, such as glycerin monostearate, glycerin monolaurate, and glycerin monopalmitate;
polyoxyalkylene castor oil ethers, such as polyoxyalkylene sorbitol fatty acid esters, sucrose fatty acid esters, and polyoxyethylene castor oil ether;
polyoxyalkylene hydrogenated castor oil ethers, such as polyoxyethylene hydrogenated castor oil ether;
polyoxyalkylene alkylamino ethers, such as polyoxyethylene laurylamino ether and polyoxyethylene stearylamino ether;
oxyethylene-oxypropylene block or random copolymers;
terminal alkyl etherified products of oxyethylene-oxypropylene block or random copolymers; and
terminal sucrose etherified products of oxyethylene-oxypropylene block or random copolymers.

The oil agent may also contain other organic components in addition to the above-described oil (low-polarity oil and/or high-polarity oil) and/or surfactant. Examples of the other organic components include antioxidants, viscosity modifiers, and preservatives. The content of the other organic components is preferably 10% by mass or less, more preferably 5% by mass or less, still more preferably 2% by mass or less, based on a total amount of the oil agent. The lower limit of the content of the other organic components may be 0% by mass or more.

In one preferred embodiment, a ratio of the amount of the oil (preferably a low-polarity oil) contained in the oil agent to the amount of the surfactant, (mass of oil:mass of surfactant), is preferably 30:1 to 1:10, more preferably 20:1 to 1:5, still more preferably 15:1 to 1:1, yet still more preferably 10:1 to 2:1.

In one preferred embodiment, the oil agent has such properties that, when the oil agent is mixed with water to a solid concentration (non-volatile component concentration) of 25 mg/L, the oil agent in the resulting diluted solution (preferably an oil-in-water dispersion) has an average particle size of preferably 0.1 to 800 nm, more preferably 1 to 500 nm, still more preferably 10 to 300 nm, yet still more preferably 20 to 200 nm. The diluted solution is a dispersion obtained by mixing the oil agent and water to a non-volatile component concentration of the oil agent of 25 mg/L, and stirring the resulting mixture at 25°C and 120 rpm for 5 minutes using a magnetic stirrer.

### (Bundled Yarn)

The bundled yarn of the present invention contains at least fibers, a sizing agent (water-soluble resin), and a specific amount or more of an oil agent, and the sizing agent and the oil agent preferably exist in a mixed state on the surfaces of the fibers. The term "mixed state" used herein means a state in which the sizing agent and the oil agent randomly exist on the surfaces of the fibers, not a state in which the sizing agent and the oil agent are disposed in the form of layers in the order mentioned or the reverse order from the surfaces of the fibers, i.e., a state in which the sizing agent and the oil agent are both exposed on the bundled yarn, not a state in which the sizing agent and the oil agent exist in the form of layered on the fibers with one of them being concealed by the other. It is extremely difficult to grasp that the oil agent and the sizing agent exist in a mixed state on the surfaces of the fibers; however, by allowing the oil agent and the sizing agent to exist in a mixed state, the bundled yarn of the present invention can achieve the below-described fiber agglomeration degree (B/(A + B + C)) and fiber separation degree (C/(A + C)) and, when the sizing agent and the oil agent that are contained in the bundled yarn are in a mixed state, a molded body having a small variation in toughness can be obtained.

The content of the fibers in the bundled yarn is preferably 85 to 99.5% by mass, more preferably 88 to 99% by mass, particularly preferably 90 to 98% by mass, with respect to a total mass of the bundled yarn. When the content of the fibers is in this range, kneading of the bundled yarn with water and a hydraulic material such as a cement is likely to not only achieve quick separation of the fibers and improve the fiber separation degree of the bundled yarn, but also prevent entanglement of separated fibers and improve the strength of the resulting molded body.

The content of the oil agent in the bundled yarn is preferably 0.05 to 4.0% by mass, more preferably 0.08 to 3.0% by mass, particularly preferably 0.10 to 2.0% by mass, with respect to a total mass of the bundled yarn. When the content of the oil agent is in this range, the below-described fiber agglomeration degree (B/(A + B + C)) and fiber separation degree (C/(A + C)), so that a molded body having a high toughness is likely to be obtained.

The amount of the oil agent per unit surface area of the fibers in the bundled yarn is 5 mg/m² or more. When the content of the oil agent per unit surface area of the fibers is less than 5 mg/m², the sizing agent (water-soluble resin) cannot be dispersed sufficiently uniformly as small domains on the surfaces of the fibers, and quick separation of the fibers cannot be achieved. Further, in a molded body obtained by curing a hydraulic composition containing the bundled yarn, an appropriate adhesion state between the fibers and a cement matrix cannot be maintained in the event of cracking or the like of the molded body, and the toughness of the molded body cannot be improved in some cases.

From the standpoint of improving the toughness of a molded body, the content of the oil agent per unit surface area of the fibers in the bundled yarn is 5 mg/m² or more, preferably 10 mg/m² or more, more preferably 15 mg/m² or more, still more preferably 20 mg/m² or more, yet still more preferably 30 mg/m² or more, particularly preferably 40 mg/m² or more, particularly more preferably 50 mg/m² or more, extremely preferably 60 mg/m² or more, especially preferably 70 mg/m² or more. Meanwhile, from the standpoint of the fiber separation of the bundled yarn, the content of the oil agent is preferably 500 mg/m² or less, more preferably 300 mg/m² or less, still more preferably 240 mg/m² or less, yet still more preferably 150 mg/m² or less, particularly preferably 100 mg/m² or less, particularly more preferably 80 mg/m² or less. From the same standpoints, the content of the oil agent per unit surface area of the fibers in the bundled yarn is preferably 5 to 500 mg/m², more preferably 10 to 500 mg/m², still more preferably 15 to 300 mg/m², yet still more preferably 20 to 300 mg/m², particularly preferably 30 to 240 mg/m², particularly more preferably 40 to 240 mg/m², extremely preferably 50 to 150 mg/m², extremely more preferably 60 to 100 mg/m², especially preferably 70 to 80 mg/m². The content (mg/m²) of the oil agent per unit surface area of the fibers is calculated as follows. It is noted here that the content of the oil agent is calculated from the content of the fibers, sizing agent, and organic components other than inorganic substances that are contained in the bundled yarn.

The content (mg/m²) of the oil agent per unit surface area of the fibers is calculated by the following Equation (1'): $\frac{Wo \sqrt{{Tρ}_{f}}}{2 \sqrt{π}} \times {10}^{2}$ (1') [wherein, Wo represents the weight (% by mass) of the oil agent per weight of the fibers; T represents the fiber fineness (dtex); and ρ_{f} represents the fiber density (g/cm³)].

When the content (mg/m²) of the oil agent cannot be calculated from the above Equation (1'), it can be calculated as follows.

First, the fiber fineness, which represents the weight per 10,000 m of the fibers, is defined as T (dtex). Taking the weight of the oil agent per weight of the fibers as Wo (% by mass), the weight of the oil agent per 10,000 m of the fibers is calculated by T × Wo/100 (g). Taking the cross-sectional circumferential length of the fibers as L cm, the surface area per 10,000 m of the fibers is calculated by L × 10⁶ (cm²). The content (mg/cm²) of the oil agent per unit surface area of the fibers is calculated by the following Equation (1), and the thus obtained value is multiplied by 10⁴, whereby the content (mg/m²) of the oil agent per unit surface area of the fibers is calculated: $T \times {W}_{o} / L \times 1 {0}^{- 5}$ (1)

The oil agent is preferably added in such an amount that makes the amount of the oil agent per unit surface area of the fibers be in the above-described range.

A method of calculating the cross-sectional circumferential length L (cm) of the fibers varies depending on the shape of the fibers, and the cross-sectional circumferential length L (cm) can be calculated in accordance with the shape of the fibers being used. For example, when the cross-section of each fiber is nearly a perfect circle and the diameter of the fiber is defined as D (cm), the diameter D (cm) of the fiber is calculated by the following equation using the fiber density ρ_{f} (g/cm³) and the fineness T (dtex): $D = \sqrt{\frac{4 T}{{πρ}_{f}}} \times {10}^{- 3}$

Accordingly, when the cross-section of each fiber is nearly a perfect circle, the circumferential length L (cm) is calculated by the following equation, and the thus calculated value of the circumferential length L (cm) is substituted into the above-described Equation (1) to calculate the content (mg/m²) of the oil agent per unit surface area of the fibers: $L = \sqrt{\frac{4 πT}{{ρ}_{f}}} \times {10}^{- 3}$ [wherein, T represents the fiber fineness (dtex), and ρ_{f} represents the fiber density (g/cm³)].

When the diameter of each fiber is defined as D (cm), the cross-sectional area of the fiber is expressed as π × D²/4 (cm²). Here, defining the fiber density as ρ_{f} (g/cm³), the fiber volume per 10,000 m is T/ρ_{f} (cm³/10,000 m). Then, the fiber cross-sectional area is expressed as T/ρ_{f} × 10⁻⁶ (cm²). Accordingly, T/ρ_{f} × 10⁻⁶ = π × D²/4 is established, and D is thus calculated by the above-described equation.

Therefore, in this case, the content (mg/m²) of the oil agent per unit surface area of the fibers is also represented by Equation (1'): $\frac{Wo \sqrt{{Tρ}_{f}}}{2 \sqrt{π}} \times {10}^{2}$ (1')

The cross-sections of the fibers may be circular, or may have a different shape other than a circular shape, such as a flat shape, an elliptical shape, a cross shape, a T-shape, a Y-shape, an L-shape, a rectangular shape, or a star shape. When the fibers have a cross-sectional shape for which the circumferential length can be calculated, the surface area of the fibers can be determined by calculation in the same manner as in the case of having the circular cross-section. When the fibers have a complex shape, the surface area of the fibers can be calculated from, for example, the amount of gas adsorbed by gas adsorption.

The content of the water-soluble resin in the bundled yarn is preferably 0.01 to 1.0% by mass, more preferably 0.02 to 0.5% by mass, particularly preferably 0.03 to 0.3% by mass, with respect to a total mass of the bundled yarn. When the content of the water-soluble resin is equal to or more than the above-described lower limit, separation of the fibers at the time of mixing a hydraulic material and the bundled yarn in a dry state is likely to be inhibited, as a result of which damage to the fibers is likely to be prevented. Further, when the content of the water-soluble resin is equal to or less than the above-described upper limit, the fiber separation degree during kneading of the bundled yarn with a hydraulic material and water is likely to be improved.

From the standpoint of inhibiting the generation of fiber balls and improving the toughness of a molded body, the content of the water-soluble resin per unit surface area of the fibers in the bundled yarn is preferably 1.5 mg/m² or more, more preferably 2.0 mg/m² or more, still more preferably 3.0 mg/m² or more, and may be, for example, 4 mg/m² or more, 10 mg/m² or more, 15 mg/m² or more, or 20 mg/m² or more. From the standpoint of improving the fiber separation of the bundled yarn, the content of the water-soluble resin is preferably 200 mg/m² or less, more preferably 100 mg/m² or less, still more preferably 50 mg/m² or less, and may be, for example, 30 mg/m² or less. The content (mg/m²) of the water-soluble resin per unit surface area of the fibers is calculated by the following Equation (2), in which the mass Wᵣ (% by mass) of the water-soluble resin per mass of the fibers is used in place of the mass Wo (% by mass) of the oil agent per mass of the fibers in the above-described Equation (1) used for calculating the content of the oil agent per unit surface area of the fibers: $\frac{{w}_{r} \sqrt{{Tρ}_{f}}}{2 \sqrt{π}} \times {10}^{2}$ (2)

From the standpoint of improving the fiber separation of the bundled yarn as well as the standpoint of improving the toughness of a molded body, a ratio (Y/X) of the content (Y% by mass) of the oil agent based on a total amount of the bundled yarn with respect to the content (X% by mass) of the water-soluble resin based on a total amount of the bundled yarn may be in a range of 0.5 to 15, preferably 1 to 15, more preferably 1 to 12, still more preferably 1.5 to 8, and may be 1.5 to 4.5, 1.5 to 3.5, or 1.5 to 2.5. In one preferred aspect, it may be in a range of 2.5 to 4.5.

The content (Y% by mass) of the oil agent based on a total amount of the bundled yarn with respect to the content (X% by mass) of the water-soluble resin based on a total amount of the bundled yarn can be measured by the method described below in the section of Examples.

The bundled yarn of the present invention has a fiber agglomeration degree (B/(A + B + C)) of preferably 0.20 or less, more preferably 0.15 or less, still more preferably 0.10 or less.

In the present specification, when an aggregate and a cement are dry-mixed with the bundled yarn for 90 seconds, water is added to the resultant, and a kneaded product obtained by subsequent 60-second mixing is sieved, the fiber agglomeration degree (B/(A + B + C)) is a mass ratio of the mass A (g) of the bundled yarn remaining on the sieve, the mass B (g) of fiber balls remaining on the sieve, and the mass C (g) of separated fibers falling through the sieve and, specifically, can be determined by the method described below in the section of Examples.

The bundled yarn of the present invention has a fiber separation degree (C/(A + C)) of preferably 0.80 or more, more preferably 0.90 or more, still more preferably 0.95 or more.

In the present specification, the fiber separation degree (C/(A + C)) can be determined from the mass A (g) of the bundled yarn remaining on the sieve and the mass C (g) of separated fibers falling through the sieve, which are obtained by the same measurement method as the fiber agglomeration degree.

The length of the bundled yarn of the present invention is not particularly limited; however, it is preferably 1 to 60 mm, more preferably 1 to 50 mm, still more preferably 1 to 40 mm, yet still more preferably 2 to 30 mm, particularly preferably 3 to 20 mm. When the length of the bundled yarn is in this range, the bundled yarn is unlikely to form fiber balls during kneading, so that a molded body having a high toughness is likely to be obtained. Further, when the resulting kneaded product is required to have a high fluidity, the length of the bunded yarn is more preferably less than 10 mm.

### <Method of Producing Bundled Yarn>

A method of producing the fibers contained in the bundled yarn of the present invention is not particularly limited, and ordinary melt spinning, solution spinning, dry spinning, or the like can be employed. The fibers contained in the bundled yarn of the present invention can be produced by, for example, the following method. For example, when the fibers are PVA fibers, a vinyl alcohol-based polymer is prepared in the form of hydrated chips having a concentration of 40 to 60% by mass, and subsequently heated and dissolved in an extruder, followed by defoaming to obtain a spinning dope. Then, a cross-linking agent is added to the thus obtained spinning dope. Examples of the cross-linking agent include ammonium sulfate, sulfuric acid, ammonium phosphate, phosphoric acid, hydrochloric acid, nitric acid, acetic acid, and oxalic acid; however, ammonium sulfate is preferred from the standpoint of inhibiting the corrosion of piping and the generation of offensive odor, and preventing the fibers from foaming. The amount of the cross-linking agent to be added is preferably 0.5 to 10% by mass with respect to the mass of the vinyl alcohol-based polymer. The temperature of the spinning dope is preferably 90 to 140°C. The spinning dope to which the cross-linking agent has been added is compressed and discharged from a nozzle opening into the air to perform dry spinning. The nozzle opening may have a circular shape, or may have a different shape other than a circular shape, such as a flat shape, a cross shape, a T-shape, a Y-shape, an L-shape, a triangular shape, a square shape, or a star shape.

Next, the thus spun fibers are dried. The drying temperature is usually 100°C or lower and, once the fibers are dried to a certain extent, it is preferred to completely dry the fibers under a temperature condition of 100°C or higher.

The drying is followed by drawing and heat treatment of the fibers. This drawing is performed under a drawing temperature of usually 200 to 250°C, preferably 220 to 240°C. The draw ratio is usually 5 or higher, preferably 6 or higher. The drawing is performed in a hot air-type drawing furnace over a period of about 20 seconds to 3 minutes. The thus drawn fibers are heat-treated as required so as to allow the fibers to have a fixed length or to contract. The fibers obtained in this manner may be crimped as required. When the fibers are polyvinyl alcohol fibers, the cross-linking agent added to the spinning dope reacts with the OH groups of polyvinyl alcohol to form cross-links during the drawing.

Subsequently, a water-soluble resin (sizing agent) and an oil agent are adhered to the thus obtained fibers.

A method of adhering the sizing agent and the oil agent to the surfaces of the fibers is not particularly limited; however, from the standpoint of the ease of uniformly adhering the sizing agent and the oil agent to the fibers, a method of adhering the sizing agent and the oil agent in the state of a liquid containing them is preferred, a method of adhering the sizing agent and the oil agent in the state of an oil-in-water dispersion in which the oil agent is dispersed in an aqueous solution of the sizing agent is more preferred, and a method of adhering the sizing agent and the oil agent in the state of an oil-in-water dispersion in which the oil agent entirely or at least partially exists in the form of a micelle or an emulsion is still more preferred. In the present specification, a "micelle" used herein means a particle formed by aggregation of the surfactant contained in the oil agent of the present invention, and an "emulsion" means a particle in which an oil is incorporated inside a micelle of the surfactant. As a method for obtaining the above-described oil-in-water dispersion, any known method may be employed and, for example, a dissolver equipped with a stirrer, or an ultrasonic dissolver can be used.

In one preferred embodiment, the present invention also provides a method of producing a bundled yarn containing plural fibers, which method includes (Step 1) the step of adhering an oil-in-water dispersion, which contains a sizing agent that is a water-soluble resin, an oil agent, and water, to the surfaces of the fibers.

This production method may further include (Step 2) the step of drying the fibers obtained in Step 1 in the state of a bundle of plural fibers.

Dispersed particles contained in the oil-in-water dispersion have an average particle size of preferably 1 to 500 nm, more preferably 5 to 400 nm, still more preferably 10 to 300 nm, yet still more preferably 50 to 200 nm. The average particle size of the dispersed particles contained in the oil-in-water dispersion can be adjusted by, for example, the amount of the sizing agent and the oil agent that are contained in the oil-in-water dispersion, the ratio of an oil in the oil agent, the pH of the oil-in-water dispersion, the stirring speed and the stirring time in the preparation of the oil-in-water dispersion, and can be measured by the method described below in the section of Examples. When the average particle size of the dispersed particles contained in the oil-in-water dispersion is in the above-described range, not only a bundled state can be maintained even with the application of a shear stress in the absence of water, but also a bundled yarn that is easily separated into fibers by the presence of water is likely to be obtained. The average particle size of the dispersed particles can be measured using a particle size analyzer (e.g., "ELS-Z" (manufactured by Otsuka Electronics Co., Ltd.)). The present invention also provides a bundled yarn produced by the above-described production method of the present invention.

The concentration of the sizing agent and the oil agent in the dispersion may be set as appropriate in accordance with the apparatus to be used, the desired content of the sizing agent and that of the oil agent, the viscosity of the solution, and the like; however, in the case of using a liquid containing the sizing agent and the oil agent to adhere the sizing agent and the oil agent to the surfaces of the fibers, from the standpoint of removing the liquid component (e.g., water) by drying after the adhesion, the content of the oil agent in the dispersion is preferably about 5 to 200 g/L, more preferably about 8 to 150 g/L, still more preferably about 10 to 100 g/L. Further, the content of the sizing agent in the dispersion is preferably about 0.5 to 100 g/L, more preferably about 1.0 to 50 g/L, still more preferably about 2.0 to 30 g/L.

The amount of water in the dispersion is preferably 80% by mass or more, more preferably 85% by mass or more, still more preferably 90% by mass or more, with respect to a total amount of the dispersion.

The above-described oil-in-water dispersion is a composition suitable for use as an aqueous sizing composition. Therefore, in one preferred embodiment, the present invention also provides an aqueous sizing composition containing: a sizing agent that is a water-soluble resin; an oil agent; and water, in which the content of water is 80% by mass or more with respect to a total amount of the aqueous sizing composition, and the aqueous sizing composition is an oil-in-water dispersion in which dispersed particles have an average particle size of 1 to 500 nm. The above description relating to the oil-in-water dispersion also applies to the aqueous sizing composition in the same manner.

A method of adhering the above-described dispersion to the surfaces of the fibers is not particularly limited, and any known method, such as immersion, dipping, spraying, or coating, may be employed and can be performed using, for example, a touch roller or a ruling pen.

The bundled yarn of the present invention can be obtained by drying the liquid component in a state where plural fibers to which the liquid containing the sizing agent and the oil agent has been adhered are bundled. The drying conditions are not particularly limited, and the temperature and the time may be set as appropriate such that the solvent in use is evaporated. Other components may also be incorporated into the liquid containing the sizing agent and the oil agent to produce the bundled yarn of the present invention.

Further, the present invention provides a bundled yarn that is produced using an oil agent having an average particle size of 0.1 to 800 nm in an oil-in-water dispersion adjusted to a solid concentration of 25 mg/L. This oil agent is the oil agent described above for the bundled yarn of the present invention, and the description relating to the oil agent applies in the same manner. The oil agent has such properties that, when the oil agent is mixed with water to a solid concentration (non-volatile component concentration) of 25 mg/L, the oil agent in the resulting diluted solution (preferably an oil-in-water dispersion) has an average particle size of preferably 0.1 to 800 nm, more preferably 1 to 500 nm, still more preferably 10 to 300 nm, yet still more preferably 20 to 200 nm. The diluted solution is a dispersion obtained by mixing the oil agent and water to a non-volatile component concentration of the oil agent of 25 mg/L, and stirring the resulting mixture at 25°C and 120 rpm for 5 minutes using a magnetic stirrer. The bundled yarn produced using the oil agent is preferably a bundled yarn produced using the above-described aqueous sizing composition containing the oil agent.

The bundled yarn of the present invention is usually a bundled yarn cut to a desired fiber length. A cutting method is not particularly limited, and examples thereof include a side cutting method, a water jet method, a laser cutting method, a disc blade cutting method, an ultrasonic cutting method, and a scissors cutting method. Thereamong, from the standpoint of inhibiting damage to the fiber ends, a side cutting method, a laser cutting method, and a water jet method are preferred.

### (Sizing Agent)

The sizing agent contained in the bundled yarn of the present invention is a water-soluble resin. In the present specification, the water-soluble resin is a resin that has a solubility of 9 g/L or more in an alkaline water of pH 12 at room temperature (20°C). In other words, when 2 parts by mass of the water-soluble resin is added to 100 parts by mass of an alkaline water of pH 12 and the resultant is stirred at 20°C for 5 minutes, preferably 45% by mass or more of the water-soluble resin is dissolved. This solubility is also referred to as "alkali solubility". Specifically, the solubility may be evaluated by measuring the mass of the water-soluble resin that is dissolved when 2 parts by mass of a film of the water-soluble resin (thickness: about 50 µm, size: about 1-cm square) is put into 100 parts by mass of an alkaline water of pH 12 at 20°C and the resultant is stirred at a stirring speed of 500 rpm for 5 minutes.

From the standpoint of improving the fiber separation of the bundled yarn as well as the standpoint of improving the toughness of a molded body, the alkali solubility of the water-soluble resin is preferably 10 g/L or more, more preferably 12 g/L or more, still more preferably 14 g/L or more, particularly preferably 16 g/L or more and, from the standpoint of improving the fiber bundling performance and inhibiting the generation of buckle parts and the like, the alkali solubility of the water-soluble resin is preferably 50 g/L or less, more preferably 45 g/L or less, still more preferably 40 g/L or less, yet still more preferably 20 g/L or less, particularly preferably 19 g/L or less, especially preferably 18 g/L or less. The alkali solubility is the amount of the water-soluble resin that is dissolved when the water-soluble resin in the form of a film is added to an alkaline water of pH 12 (e.g., an alkaline water adjusted to pH 12 with sodium hydroxide) and the resultant is stirred at room temperature (20°C). For example, when 2 parts by mass of the water-soluble resin is added to 100 parts by mass of an alkaline water of pH 12 and the resultant is stirred at 20°C for 5 minutes, preferably 50% by mass or more, more preferably 60% by mass or more, yet still more preferably 70% by mass or more, particularly preferably 80% by mass of the water-soluble resin is dissolved. Accordingly, the alkali solubility of the water-soluble resin is preferably 10 to 50 g/L, more preferably 12 to 40 g/L, still more preferably 14 to 20 g/L, yet still more preferably 16 to 19 g/L, particularly preferably 16 to 18 g/L.

The water-soluble resin preferably has a lower neutral solubility (solubility measured under the same conditions as the alkali solubility, using water of pH 7 instead of the alkaline water) than the alkali solubility. The difference between the alkali solubility and the neutral solubility (alkali solubility - neutral solubility) is preferably 10% by mass or more, more preferably 20% by mass or more, still more preferably 30% by mass or more. The greater the difference between the neutral solubility and the alkali solubility, the further the agglutination of the bundled yarn caused by humid environment, rain, or the like can be suppressed.

The water-soluble resin is not particularly limited as long as it is a resin having the above-described solubility, and examples thereof include polyvinyl alcohol resins (resins containing a structural unit derived from a vinyl alcohol), ethyleneimine resins (resins containing a structural unit derived from ethyleneimine), acrylic resins, urethane resins, and epoxy resins.

From the standpoint of the solubility in a cement matrix, the water-soluble resin is preferably a resin selected from the group consisting of polyvinyl alcohol resins, ethyleneimine resins, acrylic resins, and epoxy resins, more preferably a resin selected from the group consisting of polyvinyl alcohol resins, ethyleneimine resins, and acrylic resins.

The water-soluble resin is still more preferably a vinyl alcohol resin containing a structural unit derived from a vinyl alcohol, yet still more preferably a modified polyvinyl alcohol.

In one preferred aspect of the present invention, the water-soluble resin is a modified polyvinyl alcohol, and this modified polyvinyl alcohol has a structural unit (X) derived from an unsaturated carboxylic acid or derivative thereof. When the amount of all monomer units of the modified polyvinyl alcohol is taken as 100% by mole, the amount of the structural unit (X) is preferably 0.1 to 10% by mole. Further, the modified polyvinyl alcohol preferably has a saponification degree of preferably 85% by mole or higher. The term "modified polyvinyl alcohol" used herein refers to a polyvinyl alcohol modified with the structural unit (X) derived from an unsaturated carboxylic acid or derivative thereof, and the modified polyvinyl alcohol has at least a structural unit derived from a vinyl alcohol and the structural unit (X) derived from an unsaturated carboxylic acid or derivative thereof. The modified polyvinyl alcohol may also contain a structural unit other than the above-described ones.

From the standpoint of increasing the fiber separation degree of the bundled yarn and reducing the fiber agglomeration degree of separated fibers to improve the effect of reinforcing a molded body by the fibers, the amount of the structural unit (X) is more preferably 0.5 to 10% by mole, still more preferably 1 to 9.5% by mole, yet still more preferably 2 to 9% by mole. The amount of the structural unit (X) that is contained in the modified polyvinyl alcohol and derived from an unsaturated carboxylic acid or derivative thereof can be determined from a peak in ¹H-NMR of the modified polyvinyl alcohol.

From the standpoint of sufficiently improving the solubility of the polyvinyl alcohol in water, the saponification degree of the polyvinyl alcohol is preferably 85% by mole or higher, more preferably 88% by mole or higher, still more preferably 90% by mole or higher, yet still more preferably 95% by mole or higher, particularly preferably 98% by mole or more. An upper limit of the saponification degree may be any value as long as it is 100% by mole or lower and, from the standpoint of improving the solubility of the polyvinyl alcohol in water through a reduction in crystallization degree, the saponification degree is preferably 99.9% by mole or lower, more preferably 99.8% by mole or lower. Therefore, the saponification degree of the polyvinyl alcohol is preferably 85% by mole to 100% by mole, more preferably 88% by mole to 100% by mole, still more preferably 90% by mole to 99.9% by mole, yet still more preferably 95% by mole to 99.9% by mole, particularly preferably 98% by mole to 99.8% by mole. The saponification degree can be determined by the method prescribed in JIS K6726:1994.

The polyvinyl alcohol has a viscosity-average polymerization degree of preferably 100 to 5,000, more preferably 100 to 4,000, still more preferably 300 to 3,500. When the viscosity-average polymerization degree is equal to or higher than the above-described lower limit, the fiber bundling performance of the sizing agent is likely to be improved. Further, when the viscosity-average polymerization degree is equal to or lower than the above-described upper limit, the solubility of the polyvinyl alcohol in water can be improved, so that quick and sufficient separation of the fibers is likely to be attained. The viscosity-average polymerization degree can be determined by the method prescribed in JIS K6726:1994. Specifically, when the saponification degree is lower than 99.5% by mole, the viscosity-average polymerization degree (P) can be calculated by the following equation using the intrinsic viscosity [η] (L/g) that is measured in water at 30°C for a PVA saponified to a saponification degree of 99.5% by mole or higher: $P = {\left(\left[η\right]\times {10}^{4}/8.29\right)}^{\left(1/0.62\right)}$

Examples of the unsaturated carboxylic acid that gives the structural unit (X) contained in the modified polyvinyl alcohol include ethylenically unsaturated carboxylic acids, such as acrylic acid, methacrylic acid, phthalic acid, maleic acid, and itaconic acid. Examples of their derivatives include alkyl esters and metal salts of the above-exemplified ethylenically unsaturated carboxylic acids. The modified polyvinyl alcohol used as the sizing agent may have a single kind or two or more kinds of structural units as the structural unit (X) derived from an unsaturated carboxylic acid or derivative thereof, and may have other structural unit as well.

From the standpoint of increasing the fiber separation degree of the fibers and reducing the agglomeration degree of separated fibers, the unsaturated carboxylic acid or derivative thereof is preferably at least one selected from the group consisting of (meth)acrylic acids, (meth)acrylic acid alkyl esters, and (meth)acrylic acid metal salts. It is noted here that the term "(meth)acryl" used herein means "acryl and/or methacryl".

Examples of the (meth)acrylic acid alkyl esters include esters formed by a (meth)acrylic acid and a linear or branched alcohol having 1 to 5 carbon atoms, specifically methyl (meth)acrylate, ethyl (meth)acrylate, propyl (meth)acrylate, butyl (meth)acrylate, and pentyl (meth)acrylate. Examples of the (meth)acrylic acid metal salts include alkali metal salts of (meth)acrylic acids. Examples of alkali metal elements thereof include lithium, sodium, and potassium.

The modified polyvinyl alcohol used as the sizing agent in one preferred embodiment of the present invention usually has at least plural structural units derived from a vinyl alcohol and plural structural units (X) derived from an unsaturated carboxylic acid or derivative thereof, which are monomers, and the amount of the structural units (X) derived from an unsaturated carboxylic acid or derivative thereof is 0.1 to 10% by mole, taking the amount of all monomer units as 100% by mole. Taking into consideration this molar ratio, a majority of the structural units (X) derived from an unsaturated carboxylic acid or derivative thereof that are contained in the modified polyvinyl alcohol are believed to exist adjacent to the structural units derived from a vinyl alcohol. In this case, the structural units (X) and the structural units derived from a vinyl alcohol may exist as separate structural units (monomer units); however, at least some of the plural structural units (X) may form ring-closed structural units with hydroxy groups contained in their adjacent structural units derived from a vinyl alcohol.

It is noted here that a ring-closed structural unit formed by, for example, a carboxyl group contained in the structural unit (X) derived from an unsaturated carboxylic acid or derivative thereof and a hydroxy group contained in a structural unit derived from a vinyl alcohol is also a structural unit that contains the structural unit (X), and is thus a structural unit derived from an unsaturated carboxylic acid or derivative thereof. In the present specification, for the calculation of the amount of all monomer units of the modified polyvinyl alcohol, such a ring-closed structural unit is not regarded as a single structural unit, but rather the pre-ring-closing structural unit (X) and a structural unit derived from a vinyl alcohol, which are structural units each corresponding to a monomer, are regarded as separate monomer units.

In one preferred embodiment of the present invention, the modified polyvinyl alcohol contained in the sizing agent has the structural unit (X) derived from an unsaturated carboxylic acid or derivative thereof, and/or a structural unit in which the structural unit (X) is ring-closed with its adjacent structural unit derived from a vinyl alcohol. When a polyvinyl alcohol is modified with the structural unit (X) derived from an unsaturated carboxylic acid or derivative thereof, the resulting modified polyvinyl alcohol has excellent performance as a sizing agent, particularly in terms of fiber bundling performance, in a state of not being dissolved in water. Therefore, damage to the fibers during dry-mixing of the bundled yarn with a hydraulic material is likely to be inhibited. Since the polyvinyl alcohol modified with the structural unit (X) is highly soluble in water because of its carboxyl group and the like, the bundled yarn containing such a modified polyvinyl alcohol as a sizing agent is characterized in that the sizing agent is rapidly dissolved when the bundled yarn is mixed with water, and that quick and sufficient separation of the fibers is thereby attained. With regard to the quickness of fiber separation, the desired quickness may vary depending on, for example, the amount of the bundled yarn to be used and the intended use of the hydraulic material and, in Examples of the present specification, the fiber separation performance was evaluated when kneading was performed in a very short period of, for example, about several minutes.

Particularly, when the modified polyvinyl alcohol has the structural unit (X) derived from an unsaturated carboxylic acid or derivative thereof, and/or a structural unit in which the structural unit (X) is ring-closed with its adjacent structural unit derived from a vinyl alcohol, the modified polyvinyl alcohol in a ring-closed state has an extremely low solubility in water and thus exhibits excellent performance as a sizing agent, so that damage to the fibers during dry-mixing is likely to be inhibited. Such a ring-closed structure has a very high ring-opening property particularly when dissolved in water under an alkaline environment, and the modified polyvinyl alcohol having a ring-opened structural unit (X) is highly soluble in water. Therefore, the bundled yarn containing such a modified polyvinyl alcohol as a sizing agent is characterized in that the sizing agent is rapidly dissolved when the bundled yarn is mixed with water under an alkaline environment, and that quick and sufficient separation of the fibers is likely to be achieved.

In one preferred embodiment of the present invention, from the standpoint of increasing the fiber separation degree of the bundled yarn and inhibiting the agglomeration of separated fibers, the modified polyvinyl alcohol contains, as the structural unit (X) derived from an unsaturated carboxylic acid or derivative thereof, a structural unit represented by Formula (X1): 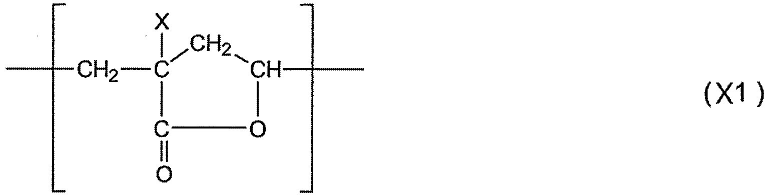
[wherein, X represents a hydrogen atom or a methyl group],
and/or a structural unit represented by Formula (X2): 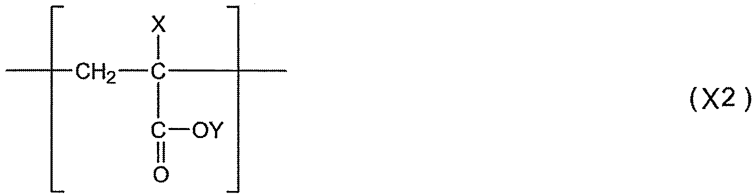
[wherein, X represents a hydrogen atom or a methyl group, and Y represents a hydrogen atom, an alkali metal atom, or an alkyl group having 1 to 5 carbon atoms].

The structural unit represented by Formula (X2) is a structural unit derived from at least one selected from the group consisting of (meth)acrylic acids, (meth)acrylic acid alkyl esters, and (meth)acrylic acid metal salts, and ring-closing of the structural unit (X2) with an adjacent structural unit derived from a vinyl alcohol yields the structural unit (X1). In cases where the modified polyvinyl alcohol contains the structural unit represented by Formula (X1) and/or the structural unit represented by Formula (X2) as the structural unit (X), when the bundled yarn is kneaded with a hydraulic material such as a cement and water, not only quick separation of the fibers is likely to be achieved and the fiber separation degree of the bundled yarn is likely to be improved, but also agglomeration of separated fibers is likely to be inhibited.

The modified polyvinyl alcohol may contain one structural unit represented by Formula (X1), or may contain two structural units represented by Formula (X1). Further, the modified polyvinyl alcohol may contain one structural unit represented by Formula (X2), or may contain two or more structural units represented by Formula (X2). Moreover, the modified polyvinyl alcohol may contain one or more Formula (X1) and one or more Formula (X2).

When the modified polyvinyl alcohol contains the structural unit represented by Formula (X1) and/or the structural unit represented by Formula (X2), a molar amount ratio (X1/(X1+X2)) of the structural unit represented by Formula (X1) with respect to a total molar amount of the structural unit represented by Formula (X1) and the structural unit represented by Formula (X2) is preferably 0.65 to 1.0, more preferably 0.70 to 0.99, still more preferably 0.85 to 0.99, particularly preferably 0.90 to 0.99. With the content ratio of the structural unit represented by Formula (X1) being equal to or higher than the above-described lower limit, when the bundled yarn is kneaded with a hydraulic material such as a cement and water, not only quick separation of the fibers is likely to be achieved and the fiber separation degree of the bundled yarn is likely to be improved, but also agglomeration of separated fibers is likely to be inhibited. The content (molar amount) of the structural unit (X1) and that of the structural unit (X2) in the modified polyvinyl alcohol can each be determined from a peak in ¹H-NMR of the modified polyvinyl alcohol.

In one preferred embodiment of the present invention, the modified polyvinyl alcohol contains at least the structural unit represented by Formula (X1). In this aspect, the amount of the structural unit represented by Formula (X1) is preferably 0.1 to 10% by mole, more preferably 0.5 to 10% by mole, still more preferably 1 to 9.5% by mole, particularly preferably 2 to 9% by mole, taking the amount of all monomer units of the modified polyvinyl alcohol as 100% by mole. When the amount of the structural unit represented by Formula (X1) is in this range, the performance of the modified polyvinyl alcohol as a sizing agent (e.g., fiber bundling performance) is likely to be improved and, for example, damage to the fibers during dry-mixing of the bundled yarn with a hydraulic material is likely to be inhibited. In addition, quick and sufficient separation of the fibers is likely to be achieved at the time of mixing the bundled yarn with water. Consequently, not only the fiber separation degree of the bundled yarn is likely to be increased and the fiber agglomeration is likely to be inhibited, but also the mechanical strength of a molded body is likely to be enhanced.

### (Method of Producing Modified Polyvinyl Alcohol)

The modified polyvinyl alcohol can be obtained by copolymerizing a vinyl ester monomer and a carbonyl group-containing monomer (an unsaturated carboxylic acid or derivative thereof) by a known method, saponifying the thus obtained copolymer by a known method, and subsequently performing a washing treatment and a heating treatment on the thus saponified copolymer. The modified polyvinyl alcohol can be efficiently obtained by further performing neutralization by an acid treatment after the saponification, followed by a washing treatment and a heating treatment.

Examples of the vinyl ester monomer used in the production of the modified polyvinyl alcohol include vinyl acetate, vinyl propionate, and vinyl formate; however, from the economic standpoint, it is preferred to use vinyl acetate. Examples of the carbonyl group-containing monomer used in the production of the modified polyvinyl alcohol include acrylic acid, methacrylic acid, and alkyl esters of these carboxylic acids. As the alkyl esters, for example, methyl ester and ethyl ester can be preferably used. Further, carboxylates obtained by partially or entirely neutralizing any of these carboxylic acids and esters can also be preferably used. A vinyl monomer containing a lactone ring in a side chain may be used as well.

In order to allow at least some of plural structural units (X) to form ring-closed structural units with hydroxy groups contained in their adjacent structural units derived from a vinyl alcohol, it is important to perform a heat treatment. A method of the heating treatment is not particularly limited; however, it is preferred to use, for example, a hot-air dryer or a tumble dryer. The heating temperature is preferably 60 to 150°C, more preferably 80 to 150°C. The heating time is preferably 1 to 10 hours, more preferably 2 to 8 hours. By the above-described heating treatment, for example, the ratio of the structural unit (X1) with respect to a total amount of the structural unit (X1) and the structural unit (X2) can be adjusted to be in the above-prescribed range.

### (Fibers)

The fibers contained in the bundled yarn of the present invention are not particularly limited, and examples thereof include: synthetic polymer fibers, such as polyvinyl alcohol (hereinafter, may be referred to as "PVA") fibers, polyolefin fibers, polyamide fibers (including aramid fibers), acrylic fibers, polybenzoxazole fibers, polyester fibers, and rayon fibers (e.g., polynosic fibers and solvent-spun cellulose fibers); metal fibers; and glass fibers.

PVA fibers are fibers that contain a vinyl alcohol-based polymer and, from the standpoints of mechanical performance, adhesion with a hydraulic material, and alkali resistance, the fibers contain a vinyl alcohol-based polymer in an amount of preferably not less than 30% by mass, more preferably not less than 60% by mass, still more preferably not less than 80% by mass. From the standpoint of improving the strength of the resulting molded body, the fibers contained in the bundled yarn of the present invention are preferably PVA fibers. When the fibers are PVA fibers, since the PVA fibers are highly hydrophilic because of their molecular structure and hydroxy groups of the fibers bind with Ca of a cement, the chemical adhesive strength between the fibers and the cement is likely to be enhanced through improvement in the affinity. In addition, this allows the peripheries of the fibers to have a calcium hydroxide-rich structure; therefore, the frictional resistance between the fibers and the cement is likely to be improved.

The vinyl alcohol-based polymer constituting the PVA fibers may be a vinyl alcohol homopolymer or, as long as the effects of the present invention are not impaired, the vinyl alcohol-based polymer may be a copolymer of a vinyl alcohol and other monomer, and may be modified. From the standpoint of improving the mechanical strength, alkali resistance, hot water resistance, and the like of the fibers, when the amount of all monomer units constituting the vinyl alcohol-based polymer is taken as 100% by mole, a total of the amount of a structural unit derived from a modified vinyl alcohol monomer, which is optionally contained, and the amount of a monomer(s) other than vinyl alcohol, which is/are optionally contained, is preferably 30% by mole or less, more preferably 10% by mole or less.

From the standpoint of improving the mechanical strength, alkali resistance, and hot water resistance of the fibers, the vinyl alcohol-based polymer constituting the PVA fibers has a viscosity-average polymerization degree of preferably 1,000 or higher, more preferably 1,500 or higher. From the standpoint of reducing the production cost of the vinyl alcohol-based polymer, the viscosity-average polymerization degree is preferably 10,000 or lower, more preferably 5,000 or lower, still more preferably 3,000 or lower. A method of measuring the viscosity-average polymerization degree is as described above for polyvinyl alcohol.

From the standpoint of the heat resistance, durability, and dimensional stability of the fibers, the vinyl alcohol-based polymer constituting the PVA fibers has a saponification degree of preferably 99% by mole or higher, more preferably 99.5% by mole or higher, still more preferably 99.8% by mole or higher. An upper limit of the saponification degree is 100% by mole or lower. A method of measuring the saponification degree is as described above for polyvinyl alcohol.

The fibers contained in the bundled yarn of the present invention may be fibers constituted by a single kind of polymer, or may be composite fibers constituted by two or more kinds of polymers. Examples of the form of the composite fibers include those of a sea-island type, a core-sheath type, and a side-by-side type.

The fibers contained in the bundled yarn of the present invention have a fiber length of preferably 1 mm or more, more preferably 2 mm or more, still more preferably 3 mm or more, and the fiber length may be, for example, 4 mm or more, 6 mm or more, or 8 mm or more. Meanwhile, the fiber length is preferably 60 mm or less, more preferably 50 mm or less, still more preferably 40 mm or less, particularly preferably 30 mm or less, particularly more preferably 20 mm or less. When the fiber length of the polyvinyl alcohol fibers is equal to or less than the above-described upper limit, entanglement of the fibers is further inhibited, so that the dispersibility of the fibers in a molded body of a hydraulic composition is further improved. In addition, since such fibers have excellent conformability to the expansion and contraction of a molded body of a hydraulic composition, the performance of reinforcing the hydraulic material is further improved. When the fiber length of the polyvinyl alcohol fibers is equal to or more than the above-described lower limit, the fibers exhibit high adhesiveness to the hydraulic material is high, so that superior performance of reinforcing the hydraulic material is obtained. The fiber length of the fibers contained in the bundled yarn is preferably 1 to 60 mm, more preferably 1 to 50 mm, still more preferably 1 to 40 mm, yet still more preferably 2 to 30 mm, particularly preferably 3 to 20 mm.

The fibers contained in the bundled yarn of the present invention have an aspect ratio of preferably 30 to 2,500, more preferably 35 to 2,000, still more preferably 40 to 1,000, yet still more preferably 40 to 500, particularly preferably 40 to 300. When the aspect ratio is equal to or higher than the above-described lower limit, the reinforcing effect attributed to the addition of the fibers is likely to be improved. Further, when the aspect ratio is equal to or lower than the above-described upper limit, entanglement of separated fibers contained in a matrix containing a hydraulic material is likely to be inhibited, so that the performance of reinforcing the hydraulic material is likely to be improved. It is noted here that the term "aspect ratio" used herein means a ratio (L/D) between the fiber length (L) and the fiber diameter (D), which can be determined by measuring the fiber length in accordance with JIS L1015:2021 "Test methods for man-made staple fibres (8.4)" and calculating the ratio thereof to the fiber diameter.

The fibers contained in the bundled yarn of the present invention have an average fiber diameter of preferably 3 to 900 µm, more preferably 4 to 800 µm, still more preferably 5 to 700 µm. When the average fiber diameter of the fibers is equal to or more than the above-described lower limit, the performance of reinforcing a molded body of a hydraulic composition is likely to be improved, so that the mechanical strength of the resulting molded body is likely to be enhanced. The average fiber diameter of the fibers can be calculated from the fineness and the density of the fibers.

The fibers contained in the bundled yarn of the present invention have a fineness of preferably 0.1 to 9,000 dtex, more preferably 0.15 to 7,000 dtex, still more preferably 0.25 to 5,000 dtex, yet still more preferably 0.25 to 500 ddtex. In a particularly preferred aspect, the fineness may be 0.25 to 150 dtex, 0.25 to 100 dtex, 0.25 to 50 dtex, 0.25 to 20 dtex, or 0.25 to 10 dtex.

The fibers contained in the bundled yarn of the present invention have a tensile strength of preferably 5 cN/dtex or more, more preferably 8 cN/dtex or more, still more preferably 10 cN/dtex or more, particularly preferably 11 cN/dtex or more. When the tensile strength of the fibers is equal to or more than the above-described lower limit, the performance of reinforcing a molded body of a hydraulic composition is likely to be improved, and the mechanical strength of the resulting molded body is thus likely to be enhanced. An upper limit of the tensile strength of the fibers contained in the bundled yarn of the present invention is not particularly limited; however, it is, for example, 30 cN/dtex or less. It is noted here that the tensile strength of the fibers is determined in accordance with JIS L1013:2021 "Testing methods for man-made filament yarns (8.5)".

### <Hydraulic Composition and Molded Body>

A hydraulic composition can be obtained by mixing the bundled yarn of the present invention with a cement component, an aggregate, and water. By curing this hydraulic composition, a molded body such as a concrete mortar can be produced. The hydraulic composition is unlikely to generate fiber balls, and a molded body produced using the bundled yarn of the present invention has high toughness; therefore, they are useful as various building materials, such as wall materials and roofing materials. The present invention also provides: a hydraulic composition containing at least the bundled yarn of the present invention, a cement component, an aggregate, and water; and a molded body obtained by curing the hydraulic composition. In the hydraulic composition and the molded body according to the present invention which contain the bundled yarn of the present invention, the bundled yarn is preferably contained in a state where the fibers are separated (fibrillated); however, the bundled yarn may be contained with some of the fibers being maintained in an integrated state by the sizing agent (remaining in the state of the bundled yarn). Therefore, such an expression "a hydraulic composition and a molded body contain the bundled yarn of the present invention" may represent a case in which the bundled yarn of the present invention is contained in a state where the fibers are separated (fibrillated) at least partially, with some of the plural fibers being maintained in an integrated state by the sizing agent.

A hydraulic material contained in the hydraulic composition is, for example, a cement component. Examples of the cement component include: Portland cements, such as an ordinary Portland cement, a high early strength Portland cement, an ultrahigh early strength Portland cement, and a moderate-heat Portland cement; alumina cements; blast-furnace cements; silica cements; and fly ash cements. These cements may be used singly, or in combination of two or more kinds thereof.

### (Aggregate)

As the aggregate contained in the hydraulic composition, a variety of aggregates can be used in accordance with the need. Examples of the aggregate include fine aggregates, coarse aggregates, light-weight aggregates, and functional aggregates. These aggregates may be used singly, or in combination of two or more kinds thereof.

A fine aggregate in the present invention is an aggregate that contains not less than 85% by mass of particles having a size of 5 mm or smaller. Examples of the fine aggregate include fine aggregates obtained by powderization or granulation of inorganic materials, such as sands, silica stone, fly ash, blast-furnace slag, volcanic ash shirasu, various kinds of sludge, and rock minerals. Examples of the sands include river sand, mountain sand, sea sand, crushed sand, silica sand, slag, glass sand, iron sand, ash sand, calcium carbonate, and artificial sand. These fine aggregates may be used singly, or in combination of two or more kinds thereof.

A coarse aggregate in the present invention is an aggregate that contains not less than 85% by mass of particles having a size of 5 mm or larger. Examples of the coarse aggregate include various gravels, artificial aggregates (e.g., blast-furnace slag), and regenerated aggregates (e.g., regenerated aggregates of construction waste). These coarse aggregates may be used singly, or in combination of two or more kinds thereof. In one preferred embodiment of the present invention, the amount of a coarse aggregate contained in the hydraulic composition is preferably 0 to 5% by volume, more preferably 0 to 3% by volume, still more preferably 0 to 1% by volume, based on a total amount of the aggregate, and it is yet still more preferred that the aggregate does not contain any coarse aggregate.

A light-weight in the present invention is an aggregate having an absolute dry specific gravity of 2.0 or less. Examples of the light-weight aggregate include: natural light-weight aggregates, such as volcanic gravels, expanded slags, and cinders; and artificial light-weight aggregates, such as expanded pearlstone, expanded perlite, expanded obsidian, vermiculite, shirasu balloon, and fly ash microballoon. These light-weight aggregates may be used singly, or in combination of two or more kinds thereof.

Examples of a functional aggregate in the present invention include colored aggregates, hard aggregates, elastic aggregates, and aggregates having specific shapes, specifically phyllosilicates (e.g., mica, talc, and kaolin), alumina, and silica. The ratio of the functional aggregate can be set as appropriate in accordance with the types of the respective aggregates and, for example, the mass ratio of aggregates other than the functional aggregate to the functional aggregate (aggregates other than functional aggregate/functional aggregate) may be 99/1 to 70/30, preferably 98/2 to 75/25, more preferably 97/3 to 80/20. The above-described functional aggregates may be used singly, or in combination of two or more kinds thereof.

The mass ratio of a total amount of the aggregate (S) to the amount of the cement component (C) (aggregate (S)/cement component (C)) may be preferably 1/10 to 5/1, more preferably 1/8 to 4/1, still more preferably 1/6 to 3/1.

In the hydraulic composition, the ratio of the mass content of water with respect to the mass content of the cement component (water/cement component) is preferably 20 to 75% by mass, more preferably 30 to 75% by mass.

The hydraulic composition may contain various admixtures as required. Examples of the admixtures include AE agents, fluidizers, water reducing agents, high-range water reducing agents, AE water reducing agents, high-range AE water reducing agents, thickening agents, water retention agents, water repellents, expanding agents, curing accelerators, retarding agents, and polymer emulsions [acrylic emulsions, ethylene-vinyl acetate emulsions, and SBR (styrene-butadiene-rubber) emulsions]. These admixtures may be used singly, or in combination of two or more kinds thereof. A polymer emulsion not only improves the brittleness of the molded body to be eventually obtained but also can enhance the adhesion between the components of the molded body. In addition, by using a polymer emulsion in combination, not only the waterproof performance of the molded body can be improved but also excessive drying can be inhibited.

The hydraulic composition may further contain a water-soluble polymer substance as required. Examples of the water-soluble polymer substance include: cellulose ethers, such as methyl cellulose, hydroxymethyl cellulose, hydroxyethyl cellulose, carboxymethyl cellulose, and hydroxypropylmethyl cellulose; polyvinyl alcohols; polyacrylic acids; and lignin sulfonates. These water-soluble polymer substances may be used singly, or in combination of two or more kinds thereof.

The amount of the bundled yarn of the present invention to be added to the hydraulic composition can be set as appropriate in accordance with the type, the fiber length, the aspect ratio, and the like of the fibers contained in the bundled yarn of the present invention and, for example, the bundled yarn of the present invention may be added in such an amount that makes the amount of the fibers be preferably 0.1 to 7% by volume, more preferably 0.3 to 5% by volume, still more preferably 0.5 to 4% by volume, based on the volume of the molded body to be eventually obtained. When the amount of the added bundled yarn is in the above-described range, the reinforcing effect provided by the fibers is enhanced, and entanglement of the fibers due to an excessively high fiber content is likely to be inhibited, so that the reinforcing effect provided by the fibers is likely to be further improved.

A molded body can be obtained by curing the hydraulic composition which contains the bundled yarn of the present invention, water, a cement component, an aggregate and, as required, various admixtures within a range that does not impair the effects of the present invention.

### <Hydraulic Composition and Method of Producing Molded Body>

The hydraulic composition is kneaded by a kneading means, such as a known or commonly used mixer. The kneading can be carried out without any particular limitation on the kneading order of the constituent materials; however, in order to minimize a physical impact on the fibers as much as possible, the kneading order is adjusted as appropriate in accordance with the constitution of the hydraulic composition, the water/cement component ratio (W/C), and the like.

The water/cement component ratio (W/C) in the hydraulic composition is adjusted as appropriate in accordance with the constitution and the like of the hydraulic composition, and it is preferably 20 to 75% by mass, more preferably 30 to 75% by mass, still more preferably 40 to 75% by mass.

A method of supplying the bundled yarn of the present invention to the hydraulic composition is not particularly limited. For example, a variety of quantitative supply apparatuses (e.g., a vibrating feeder, a screw feeder, and a belt feeder) can be used as an apparatus that supplies the bundled yarn while controlling the amount and/or the rate of loading the fibers.

In the hydraulic composition of the present invention, a method of dispersing the fibers separated from the bundled yarn is not particularly limited as long as the fibers can be dispersed in a state where the fibers do not substantially exist as fiber agglomerates. For example, a continuous kneader such as a dual arm kneader, a pressure kneader, an Eirich mixer, a super mixer, a planetary mixer, a Banbury mixer, or a continuous mixer can be used.

After the hydraulic composition in which the bundled yarn of the present invention is added and the fibers are dispersed is added to a formwork, vibration may be applied thereto as required. Vibration may be applied using, for example, JIS A8610:2004 "Building construction machinery and equipment- Internal vibrators for concrete" or JIS A8611:2004 "Building construction machinery and equipment-External vibrators for concrete". The application of vibration makes it easier to densely fill the hydraulic composition into the formwork.

After the hydraulic composition is molded into a prescribed shape, the hydraulic composition is generally hardened by curing in an atmosphere of 100°C or lower, whereby a molded body can be obtained.

The use of the hydraulic composition containing the bundled yarn of the present invention is not particularly limited, and the hydraulic composition can be used for producing a molded body for various applications. Examples of the molded body include blocks, floor panels, wall panels, partition walls, roofing materials, and roofing tiles.

### EXAMPLES

The present invention will now be described in more detail by way of Examples thereof; however, the present invention is not limited thereto.

### [Measurement Methods and Evaluation Methods]

### <Evaluation of Mixed Solutions>

### (Average Particle Size)

An oil agent and/or a sizing agent were mixed with water at the respective concentrations described below in Examples, and the resultants were each stirred to homogeneity at 300 rpm using a magnetic stirrer (manufactured by Advantec Toyo Kaisha, Ltd.). Water was further added such that each resulting mixed solution had a concentration of 25 mg/L (as a non-volatile component), and this was followed by 5-minute stirring at 120 rpm. The particle size of the thus obtained diluted solution was evaluated using a particle size analyzer (ELS-Z, manufactured by Otsuka Electronics Co., Ltd.). The solution temperature during preparation and measurement of each mixed solution was set at 25°C.

### <Evaluation of Fibers>

### (Fineness)

The fineness was measured in accordance with JIS L1015:2021 "Test methods for man-made staple fibres (8.5)".

### (Fiber Density)

The fiber density was measured in accordance with JIS L1015:2021 "Test methods for man-made staple fibres (8.14)".

### (Tensile Strength)

Using an uncut filamentous yarn with no sizing agent adhering thereto, the tensile strength was measured in accordance with JIS L1013:2021 "Testing methods for man-made filament yarns (8.5)".

### (Fiber Diameter)

From the fineness (T (dtex)) and the fiber density (ρ_{f} (g/cm³)) that were obtained by the above-described methods, the value of D (average fiber diameter) was calculated using the following equation: $D = \sqrt{\frac{4 T}{{πρ}_{f}}} \times {10}^{- 3}$

The average fiber diameter may also be obtained by randomly selecting 100 fibers, measuring the diameter of each fiber in a lengthwise central portion under a light microscope, and then calculating an average of the thus measured values as the fiber diameter.

### (Aspect Ratio)

An "aspect ratio" means a ratio (L/D) between the fiber length (L) and the fiber diameter (D). In the present invention, the average fiber length was determined taking the length of a bundled yarn as the fiber length and referring to JIS L1015:2021 "Test methods for man-made staple fibres (8.4)", and the aspect ratio was calculated from the ratio of the average fiber length to the fiber diameter.

### <Evaluation of Bundled Yarn>

### (Oil Agent Content Per Unit Surface Area of Fibers)

First, the content Wo (% by mass) of an oil agent per mass of fibers [oil agent content Y (% by mass)] was determined by the following method.

A bundled yarn whose absolute dry mass had been measured was immersed in distilled water maintained at 80°C for 3 hours to dissolve a water-soluble resin and an oil agent in the distilled water, and the bundled yarn and the resulting aqueous solution were subsequently separated to obtain an aqueous solution in which the water-soluble resin and the oil agent were dissolved. From the mass of a residue obtained by evaporating the thus obtained aqueous solution to dryness, and the ratio of the mass of the oil agent adhered to the bundled yarn with respect to a total mass of the oil agent and the water-soluble resin that were adhered to the bundled yarn, the content Wo (% by mass) of the oil agent per mass of fibers was calculated using the following equation. 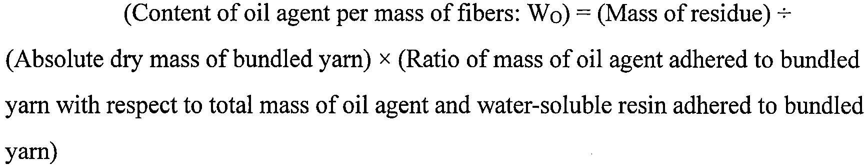 (Content of oil agent per mass of fibers: Wo) = (Mass of residue) ÷ (Absolute dry mass of bundled yarn) × (Ratio of mass of oil agent adhered to bundled yarn with respect to total mass of oil agent and water-soluble resin adhered to bundled yarn)

It is noted here that, in the above, the oil agent was separated from the bundled yarn by dissolution to calculate the content of the oil agent per mass of fibers; however, when all of the oil agent added in the production of the bundled yarn is believed to be adhered to the fibers, the content of the oil agent per mass of the fibers may be determined from the amount of the oil agent adhered to the fibers.

Next, the cross-section circumferential length L (cm) of the fibers was calculated using the following equation: $L = \sqrt{\frac{4 πT}{{ρ}_{f}}} \times {10}^{- 3}$
L (cm): cross-sectional circumferential length of fibers
T (dtex): fiber fineness
ρ_{f} (g/cm³): fiber density

From these values, the content (mg/cm²) of the oil agent per unit surface area of the fibers was calculated using the following equation and multiplied by 10⁴, and the thus obtained value was indicated in "mg/m²". $\begin{matrix}Content \left({mg / cm}^{2}\right) of oil agent per unit surface area of fibers = \\ T \times {W}_{o} / L \times {10}^{- 5}\end{matrix}$ (1) [wherein,
T (dtex): fiber fineness
Wo (% by mass): mass of oil agent per mass of fibers
L (cm): cross-sectional circumferential length of fibers]

The content of the oil agent per unit surface area of the fibers, which is shown here, refers to the content of organic components other than the water-soluble resin and inorganic substances. The thus obtained results are shown in Table 1.

### (Content of Water-Soluble Resin Per Unit Surface Area of Fibers)

The content Wᵣ (% by mass) of the water-soluble resin per mass of the fibers (% by mass) [water-soluble resin content X (% by mass)] was determined by the following method.

From the mass of the residue of the aqueous solution and the ratio of the mass of the water-soluble resin adhered to the bundled yarn with respect to a total mass of the oil agent and the water-soluble resin that were adhered to the bundled yarn, which were determined in the above-described measurement of the content of the oil agent, the mass content Wᵣ (% by mass) of the water-soluble resin per mass of the fibers was calculated using the following equation: 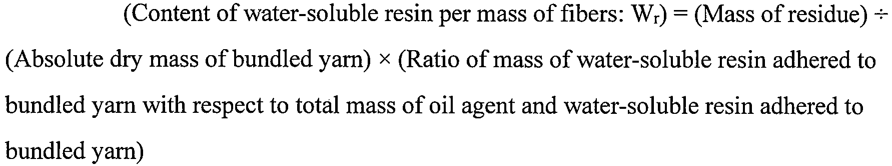 (Content of water-soluble resin per mass of fibers: Wr) = (Mass of residue) ÷ (Absolute dry mass of bundled yarn) × (Ratio of mass of water-soluble resin adhered to bundled yarn with respect to total mass of oil agent and water-soluble resin adhered to bundled yarn)

In the above, the water-soluble resin was separated from the bundled yarn by dissolution to calculate the content of the water-soluble resin per mass of the fibers; however, when the water-soluble resin added in the production of the bundled yarn is believed to be entirely adhered to the fibers, the content of the water-soluble resin per mass of the fibers may be determined from the amount of the water-soluble resin adhered to the fibers.

Next, the mass Wᵣ (% by mass) of the water-soluble resin per mass of the fibers was calculated using the following equation in which the mass of the oil agent per mass of the fibers was replaced with Wo (% by mass) in the above-described Equation (1) used for calculating the content of the oil agent per unit surface area of the fibers: $\begin{matrix}Content \left({mg / cm}^{2}\right) of water - soluble resin per unit surface area of fibers = \\ T \times {W}_{r} / L \times {10}^{- 5}\end{matrix}$ [wherein,
T (dtex): fiber fineness
Wᵣ (% by mass): mass of water-soluble resin per mass of fibers
L (cm): cross-sectional circumferential length of fibers]

From these values, the content (mg/cm²) of the water-soluble resin per unit surface area of the fibers was calculated using the following equation and multiplied by 10⁴, and the thus obtained value was indicated in "mg/m²".

### (Ratio of Content of Oil Agent Based on Total Amount of Bundled Yarn to Content of Water-Soluble Resin Based on Total Amount of Bundled Yarn)

A ratio (Y/X) of the content of the oil agent based on a total amount of the bundled yarn with respect to the content of the water-soluble resin based on a total amount of the bundle thread was calculated using the above-calculated Wo and Wᵣ as Y and X, respectively.

### (Fiber Agglomeration Degree of Bundled Yarn)

No. 5 silica sand, sea sand, and ordinary Portland cement were loaded to a Hobart mixer (manufactured by Marubishi Seisakujyo Co., Ltd.) in a mass ratio of 50:24.5:25 and mixed at 120 rpm for 30 seconds and, subsequently, 17.3% by mass of water was added to a mixture obtained by adding 0.5% by mass of a bundled yarn to the above-described mixture and mixing the resultant for 90 seconds at 120 rpm using the same Hobart mixer, after which the resulting mixture was mixed for 60 seconds at 120 rpm using the same Hobart mixer to obtain a hydraulic composition. The thus obtained hydraulic composition was put into a sieve having a nominal mesh size of 4.75 mm, and the silica sand, the sea sand, and the cement were washed off with water, followed by measurement of the mass A (g) of the bundled yarn remaining on the sieve, the mass B (g) of fiber balls remaining on the sieve, and the mass C (g) of separated fibers that fell through the sieve. The fiber agglomeration degree (B/(A + B + C)) was calculated from the thus measured values of the mass A, the mass B, and the mass C.

The results thereof are shown in Table 1.

### (Fiber Separation Degree of Bundled Yarn)

The fiber separation degree (C/(A + C)) was calculated from the above-measured values of the mass A and the mass C.

The results thereof are shown in Table 1.

The following materials were used in Examples and Comparative Examples. (Fibers)

### • PVA Fibers 1

A completely saponified PVA having a viscosity-average polymerization degree of 1,700 (manufactured by Kuraray Co., Ltd.) was dissolved in a solvent to prepare a spinning dope. This spinning dope was wet-spun in a coagulation bath, and the resulting spun fibers were subjected to roller drawing, solvent extraction, and drying, and then drawn at a temperature of 230°C to 240°C and a draw ratio of 8 to 10 in the drawing heat-treatment step of the same fiber production process, whereby drawn fibers (PVA fibers 1) were obtained. The thus obtained PVA fibers 1 had a fiber diameter of 38 µm, a tensile strength of 12 cN/dtex, and a fineness of 15 dtex.

### • PVA Fibers 2

PVA fibers 2 were obtained in the same manner as the PVA fibers 1, except that the amount of the spinning dope extruded into the coagulation bath and the draw ratio (10 to 12) were changed. The thus obtained PVA fibers 2 had a fiber diameter of 27 µm, a tensile strength of 13 cN/dtex, and a fineness of 7 dtex.

### (Sizing Agents: Water-Soluble Resins)

### • Acrylic Acid-Modified PVA 1

A modified polyvinyl alcohol having a viscosity-average polymerization degree of 1,500, a saponification degree of 99.5% by mole, a solubility of 86% by mass in an alkaline water of pH 12 at room temperature (20°C), and a solubility of 47% by mass in water of pH 7 at room temperature (20°C), in which the content ratio of the structural unit (X) derived from acrylic acid is 5% by mole, the content ratio of the structural unit (X1) is 4.8% by mole, the content ratio of the structural unit (X2) is 0.2% by mole, the ratio of the structural unit (X1) with respect to a total amount of the structural units (X1) and (X2) is 0.96, and the functional groups X and Y in the structural units (X1) and (X2) are both hydrogen atoms.

### • PVA 2

A polyvinyl alcohol having a viscosity-average polymerization degree of 1,700, a saponification degree of 88.0% by mole, a solubility of 62% by mass in an alkaline water of pH 12 at room temperature (20°C), and a solubility of 65% by mass in water of pH 7 at room temperature (20°C).

### • PVA 3

A polyvinyl alcohol having a viscosity-average polymerization degree of 1,700, a saponification degree of 96.0% by mole, a solubility of 49% by mass in an alkaline water of pH 12 at room temperature (20°C), and a solubility of 43% by mass in water of pH 7 at room temperature (20°C).

### (Oil Agents)

### • Oil Agent A

An oil agent A is an oil agent containing 15% by mass or more of a nonionic surfactant and 75% by mass or more of an oxidized polyolefin, which is a low-polarity oil, with respect to a total amount of the oil agent.

When the average particle size was measured by the above-mentioned method for a mixed solution of the oil agent A and water, which was obtained by mixing the oil agent A and water such that the concentration of a non-volatile component was 25 mg/L, the oil agent A was found to have an average particle size of 97 nm. It is noted here that water is not included in the components of the oil agent A.

### • Oil agent B

An oil agent B is an oil agent containing not more than 30% by mass of a nonionic surfactant with respect to a total amount of the oil agent.

When the average particle size was measured by the above-mentioned method for a mixed solution of the oil agent B and water, which was obtained by mixing the oil agent B and water such that the concentration of a non-volatile component was 25 mg/L, the oil agent B was found to have an average particle size of 36 nm. It is noted here that water is not included in the components of the oil agent B.

### (Cement)

- ordinary Portland cement (manufactured by Taiheiyo Cement Corporation) (Aggregate)
- TOYO SILICA SAND No. 5 (manufactured by Toyo Matelan Co., Ltd.) (Fly Ash)
- YONDEN FLY-ASH (Type II) (manufactured by Yonden Business Co., Inc.)

### (Admixtures)

- CHUPOL SSP-104 (manufactured by Takemoto Oil & Fat Co., Ltd.)
- Hi METOLOSE 90SH4000 (manufactured by Shin-Etsu Chemical Co., Ltd.)

### (Example 1)

To the PVA fibers 1, a mixed solution containing the acrylic acid-modified PVA 1 in an amount of 20 g/L and the oil agent A in an amount of 40 g/L (as a non-volatile component) was adhered in an amount of 10.0% by mass with respect to the mass of the PVA fibers 1 using a touch roller, and the resulting fibers were subsequently cut to a length of 8 mm to obtain a bundled yarn 1 having an aspect ratio of 211.

### (Example 2)

A bundled yarn 2 was obtained in the same manner as in Example 1, except that the amount of the oil agent A in the mixed solution was changed to 60 g/L (as a non-volatile component).

### (Example 3)

A bundled yarn 2 was obtained in the same manner as in Example 1, except that the amount of the oil agent A in the mixed solution was changed to 80 g/L (as a non-volatile component).

### (Example 4)

A bundled yarn 4 was obtained in the same manner as in Example 1, except that, in the mixed solution of Example 1, the amount of the acrylic acid-modified PVA 1 was changed to 45 g/L and the amount of the oil agent A was changed to 85 g/L (as a non-volatile component), and that the mixed solution was adhered in an amount of 20.0% by mass with respect to the mass of the PVA fibers 1.

### (Example 5)

A bundled yarn 5 was obtained in the same manner as in Example 1, except that the oil agent A was changed to the oil agent B.

### (Example 6)

A bundled yarn 6 was obtained in the same manner as in Example 1, except that the acrylic acid-modified PVA 1 was changed to the PVA 2.

### (Example 7)

A bundled yarn 7 was obtained in the same manner as in Example 1, except that, in the mixed solution of Example 1, the amount of the acrylic acid-modified PVA 1 was changed to 10 g/L, and the amount of the oil agent A was changed to 20 g/L (as a non-volatile component).

### (Example 8)

A bundled yarn 8 was obtained in the same manner as in Example 1, except that, in the mixed solution of Example 1, the amount of the acrylic acid-modified PVA 1 was changed to 5 g/L, and the amount of the oil agent A was changed to 10 g/L (as a non-volatile component).

### (Example 9)

To the PVA fibers 2, a mixed solution containing the acrylic acid-modified PVA 1 in an amount of 30 g/L and the oil agent A in an amount of 60 g/L (as a non-volatile component) was adhered in an amount of 10.0% by mass with respect to the mass of the PVA fibers 2 using a touch roller, and the resulting fibers were subsequently cut to a length of 6 mm to obtain a bundled yarn 9 having an aspect ratio of 226.

A bundled yarn 10 was obtained in the same manner as in Example 1, except that the acrylic acid-modified PVA 1 in the mixed solution was changed to the PVA 3.

### (Example 11)

A bundled yarn 11 was obtained in the same manner as in Example 1, except that the amount of the acrylic acid-modified PVA 1 in the mixed solution was changed to 44 g/L (as a non-volatile component).

### (Comparative Example 1)

A bundled yarn 12 was obtained in the same manner as in Example 1, except that, in the mixed solution of Example 1, the acrylic acid-modified PVA 1 was not contained, and the amount of the oil agent A was changed to 70 g/L (as a non-volatile component).

### (Comparative Example 2)

A bundled yarn 13 was obtained in the same manner as in Example 1, except that, in the mixed solution of Example 1, the oil agent A was not contained and the amount of the acrylic acid-modified PVA 1 was changed to 40 g/L (as a non-volatile component), and that the mixed solution was adhered in an amount of 15.0% by mass with respect to the mass of the PVA fibers 1.

### (Comparative Example 3)

A bundled yarn 14 was obtained in the same manner as in Example 1, except that, in the mixed solution of Example 1, the amount of the acrylic acid-modified PVA 1 was changed to 2 g/L, and the amount of the oil agent A was changed to 4 g/L (as a non-volatile component).

### <Evaluation of Toughness of Molded Bodies>

### (Preparation of Measurement Samples: (1) Kneading Step)

For each of the thus obtained bundled yarns 1 to 14, a hydraulic composition was prepared in accordance with the following method.

YONDEN FLY-ASH (Type II), No. 5 silica sand, and ordinary Portland cement were loaded to a Hobart mixer (manufactured by Marubishi Seisakujyo Co., Ltd.) in a volume ratio of 13.5:20.1:19.5 (YONDEN FLY-ASH: No. 5 silica sand: ordinary Portland cement), and mixed for 30 seconds in a dry state under a condition of 120 revolutions/min. Subsequently, each bundled yarn was added to a hydraulic composition in an amount of 2% by volume, and this was followed by 120-second mixing. Further, water was added such that the mass percentage of water/ordinary Portland cement was 66, and the resultant was kneaded for 120 seconds to obtain each of hydraulic compositions 1 to 14.

### (Preparation of Measurement Samples: (2) Molding Step)

Using the thus obtained hydraulic compositions 1 to 14, six molded bodies were produced in accordance with the following method for each of the hydraulic compositions 1 to 14, and used as measurement samples.

First, each hydraulic composition obtained by the above-described kneading step was evenly filled into a formwork of 4 cm in width and 18 cm in length using a vibrator, aiming for a thickness of 1 cm. Subsequently, for initial curing, the hydraulic composition was maintained for 24 hours in an environment having a temperature of 20°C and a humidity of 60%. Further, for heat curing, the hydraulic composition was cured for 24 hours in an environment having a temperature of 50°C and a humidity of 95%. Thereafter, the resulting molded body was removed from the formwork and left to stand for 96 hours in an environment having a temperature of 20°C and a humidity of 60%, whereby each of molded bodies 1 to 14 was obtained as a measurement sample.

### (Toughness)

Using a precision universal tester (AUTOGRAPH AGX-50kNV, manufactured by Shimadzu Corporation), a three-point bending test was performed by a centralized loading method at a test speed (crosshead speed) of 2 mm/min and a bending span of 100 mm, and a stress-strain curve was obtained from the thus determined load-displacement relationship.

In the thus obtained stress-strain curve, the integral value from the position where the strain was 0 to the position where the strain was 0.03 was defined as the toughness (N/mm²). From the toughness values obtained for six measurement samples, the average value and the coefficient of variation (=standard deviation/average value) of the toughness were calculated.

**[Table 1]**

| | | Average particle size of mixed solution (nm) | Fiber diameter (µm) | Fiber aspect ratio | Oil agent content Y (% by mass) | Sizing agent content X (% by mass) | Y/X | Content of oil agent per unit surface area (mg/m²) | Content of sizing agent per unit surface area (mg/m²) | Fiber agglomeration degree of bundled yarn | Fiber separation degree of bundled yarn | Average toughness value (N/mm²) | Coefficient of variation of toughness |
|---|---|---|---|---|---|---|---|---|---|---|---|---|---|
| Example | 1 | 99 | 38 | 211 | 0.40 | 0.20 | 2.0 | 49.1 | 24.6 | 0.00 | 1.00 | 0.31 | 0.13 |
| | 2 | 98 | 38 | 211 | 0.60 | 0.20 | 3.0 | 73.6 | 24.5 | 0.00 | 1.00 | 0.33 | 0.08 |
| | 3 | 97 | 38 | 211 | 0.80 | 0.20 | 4.0 | 98.1 | 24.5 | 0.00 | 1.00 | 0.36 | 0.14 |
| | 4 | 102 | 38 | 211 | 1.70 | 0.90 | 1.9 | 208.5 | 110.4 | 0.00 | 0.95 | 0.24 | 0.10 |
| | 5 | 37 | 38 | 211 | 0.40 | 0.20 | 2.0 | 49.1 | 24.5 | 0.00 | 0.94 | 0.31 | 0.14 |
| | 6 | 110 | 38 | 211 | 0.40 | 0.20 | 2.0 | 49.1 | 24.5 | 0.11 | 1.00 | 0.28 | 0.11 |
| | 7 | 97 | 38 | 211 | 0.20 | 0.10 | 2.0 | 24.5 | 12.3 | 0.02 | 1.00 | 0.31 | 0.15 |
| | 8 | 97 | 38 | 211 | 0.10 | 0.05 | 2.0 | 12.3 | 6.1 | 0.09 | 1.00 | 0.26 | 0.09 |
| | 9 | 98 | 27 | 226 | 0.60 | 0.30 | 2.0 | 50.3 | 25.1 | 0.00 | 1.00 | 0.21 | 0.09 |
| | 10 | 123 | 38 | 211 | 0.40 | 0.20 | 2.0 | 49.1 | 24.5 | 0.00 | 0.65 | 0.15 | 0.21 |
| | 11 | 97 | 38 | 211 | 0.40 | 0.44 | 0.9 | 49.1 | 54.5 | 0.00 | 0.79 | 0.17 | 0.18 |
| Comparative Example | 1 | 97 | 38 | 211 | 0.70 | 0.00 | - | 85.8 | 0.0 | 0.30 | 1.00 | 0.12 | 0.69 |
| | 2 | 8 | 38 | 211 | 0.00 | 0.60 | - | 0.0 | 73.6 | 0.00 | 0.48 | 0.15 | 0.36 |
| | 3 | 97 | 38 | 211 | 0.04 | 0.02 | 2.0 | 4.4 | 2.2 | 0.45 | 1.00 | 0.11 | 0.30 |

The bundled yarns of Examples 1 to 11 according to the present invention were confirmed to be bundled yarns that provide molded bodies having a high toughness and a small variation in toughness. On the other hand, the bundled yarns of Comparative Examples were not able to provide sufficient toughness and, even if they had a high toughness, did not provide molded bodies having a small variation in toughness.

## Claims

1. A bundled yarn, comprising plural fibers integrated by a sizing agent,
wherein
the sizing agent is a water-soluble resin, and
the bundled yarn further comprises an oil agent at a content of 5 mg/m² or more per unit surface area of the fibers.

2. The bundled yarn according to claim 1, comprising the oil agent at a content of 30 mg/m² or more per unit surface area of the fibers.

3. The bundled yarn according to claim 1, comprising the oil agent at a content of 500 mg/m² or less per unit surface area of the fibers.

4. The bundled yarn according to claim 1, wherein the sizing agent and the oil agent are in a mixed state.

5. The bundled yarn according to claim 1, wherein the fibers have an average fiber diameter of 3 to 900 µm.

6. The bundled yarn according to claim 1, wherein the oil agent comprises an oil and/or a surfactant.

7. The bundled yarn according to claim 1, wherein, when 2 parts by mass of the water-soluble resin is added to 100 parts by mass of an alkaline water of pH 12 and the resultant is stirred at 20°C for 5 minutes, 60% by mass or more of the water-soluble resin is dissolved.

8. The bundled yarn according to claim 1, wherein the water-soluble resin comprises a structural unit derived from a vinyl alcohol.

9. The bundled yarn according to claim 1, comprising the water-soluble resin at a content of 4 mg/m² or more per unit surface area of the fibers.

10. The bundled yarn according to claim 9, comprising the water-soluble resin at a content of 200 mg/m² or less per unit surface area of the fibers.

11. The bundled yarn according to claim 1, wherein a ratio (Y/X) of the content (Y% by mass) of the oil agent based on a total amount of the bundled yarn with respect to the content (X% by mass) of the water-soluble resin based on a total amount of the bundled yarn is 1 to 15.

12. The bundled yarn according to claim 1, wherein the fibers have an aspect ratio of 30 to 2,500.

13. A method of producing a bundled yarn comprising plural fibers, the method comprising the following step 1:
(Step 1) the step of adhering an oil-in-water dispersion, which comprises a sizing agent that is a water-soluble resin, an oil agent, and water, to the surfaces of the fibers.

14. The method according to claim 13, wherein dispersed particles comprised in the oil-in-water dispersion have an average particle size of 1 to 500 nm.

15. A bundled yarn, produced by the method according to claim 13 or 14.

16. An aqueous sizing composition, comprising:
a sizing agent that is a water-soluble resin;
an oil agent; and
water,
wherein
the content of water is 80% by mass or more with respect to a total amount of the aqueous sizing composition, and
the aqueous sizing composition is an oil-in-water dispersion in which dispersed particles have an average particle size of 1 to 500 nm.

17. A hydraulic composition, comprising, at least:
the bundled yarn according to any one of claims 1 to 12;
a cement component;
an aggregate; and
water.

18. The hydraulic composition according to claim 17, wherein the aggregate does not contain a coarse aggregate.

19. The hydraulic composition according to claim 17, wherein a ratio (water/cement component) of the mass content of water with respect to the mass content of the cement component is 20 to 75% by mass.

20. A molded body, obtained by curing the hydraulic composition according to claim 17.

21. The bundled yarn according to claim 1, produced using an oil agent that has an average particle size of 0.1 to 800 nm in an oil-in-water dispersion adjusted to a solid concentration of 25 mg/L.
